# EUROPÄISCHE PATENTSCHRIFT

(11) **EP 1 237 970 B1**
(45) Veröffentlichungstag und Bekanntmachung des Hinweises auf die Patenterteilung: **27.08.2003**
(21) Anmeldenummer: 00983248.6
(22) Anmeldetag: 07.12.2000
(51) Int. Cl.: C08G 18/08, C08G 18/12, C08G 18/66

(54) **VERFAHREN ZUR HERSTELLUNG VON SELBSTEMULGIERBAREN WÄSSRIGEN POLYURETHAN-HARZEN MIT VERBESSERTEN EIGENSCHAFTEN**
METHOD FOR PRODUCING SELF-EMULSIFIABLE AQUEOUS POLYURETHANE RESINS HAVING IMPROVED CHARACTERISTICS
PROCEDE DE PRODUCTION DE RESINES DE POLYURETHANNE AQUEUSES AUTO-EMULSIFIANTES, PRESENTANT DES PROPRIETES AMELIOREES

(30) Priorität: 08.12.1999 DE 19959170
(43) Veröffentlichungstag der Anmeldung: 11.09.2002
(73) Patentinhaber: Degussa Construction Chemicals GmbH, 83308 Trostberg (DE)
(72) Erfinder: MAIER, Alois, 84549 Engelsberg (DE); INGRISCH, Stefan, 83358 Seebruck (DE); KERN, Alfred, 84558 Kirchweidach (DE)
(74) Vertreter: Böhm, Brigitte, Dipl.-Chem. Dr.
(86) Internationale Anmeldenummer: EP0012355
(87) Internationale Veröffentlichungsnummer: WO01042327

(56) Entgegenhaltungen:
- EP-A- 0 204 938
- YANG ET AL: "Carboxylate-containing chain-extended polyurethanes" JOURNAL OF POLYMER SCIENCE PART B: POLYMER PHYSICS, Bd. 29, Nr. 5, April 1991 (1991-04), Seiten 581-588, XP000228578 New York , US
- KIM ET AL: "Aqueous Dispersion of Polyurethane Anionomers from H12MDI/IPDI, PCL, BD and DMPA" JOURNAL OF APPLIED POLYMER SCIENCE, Bd. 53, Nr. 3, 18. Juli 1994 (1994-07-18), Seiten 371-378, XP002162871 New York, US

## Beschreibung

Die vorliegende Erfindung betrifft ein Verfahren zur Herstellung von selbstemulgierbaren wässrigen Polyurethan-Harzen mit verbesserten Eigenschaften sowie deren Verwendung als Bindemittel im Baubereich für ein- oder zweikomponentige Beschichtungen, Dichtstoffe, Klebstoffe, Lacke, Membranen, Sportbodenbeläge und Versiegelungen.

Wässrige Polyurethan-Dispersionen gewinnen in bauchemischen Anwendungen aufgrund von ökologischen, ökonomischen und physiologischen Gesichtspunkten immer mehr an Bedeutung. In der Bauchemie werden insbesondere isocyanatfreie und lösemittelarme bzw. lösemittelfreie Polyurethan-Dispersionen mit einem ausreichend hohen Festkörpergehalt an Polyurethan-Polymer und hervorragenden mechanischen Eigenschaften gewünscht, die mit Hilfe von technisch einfachen und zugleich universellen Herstellungsverfahren zugänglich gemacht werden können.

Die Chemie und Technologie der wasserbasierenden Polyurethane ist seit vielen Jahren bekannt und wird in einer großen Zahl von Veröffentlichungen im Detail beschrieben, z.B. D. Dieterich, K. Uhlig in *Ullmann's Encyclopedia of Industrial Chemistry, Sixth Edition 1999 Electronic Release*. Wiley-VCH; D. Dieterich in *Houben-Weyl, Methoden der Organischen Chemie*. Bd. E20, H. Bartl, J. Falbe (Hrsg.), Georg Thieme Verlag, Stuttgart 1987, S. 1641ff.; D. Dieterich, Prog. Org. Coat. **9** (1981) 281-330; J. W. Rosthauser, K. Nachtkamp, Journal Of Coated Fabrics **16** (1986) 39-79; R. Arnoldus, Surf. Coat. 3 (Waterborne Coat.) (1990), 179-98.

Der *Prepolymer Mixing Process* und der *Solvent Process* zur Herstellung von Polyurethan-Dispersionen sind allgemein bekannt und für die technische Produktion von großem Interesse.

Bei dem sog. *Prepolymer Mixing Process* bzw. *Präpolymer-Mischverfahren* (vgl. Patentanmeldungen WO 98/05886, DE-OS 197 53 222 und EP-A 0 919 579) wird meist mit großen Mengen an hochsiedenden und wasserlöslichen Solventien, wie bspw. N-Methylpyrrolidon, gearbeitet, um die Viskosität der Polyurethan-Prepolymere zu verringern. Diese Lösemittel werden nach der Herstellung der Polyurethan-Dispersion nicht mehr entfernt und verbleiben im Endprodukt. Bei der Auftrocknung der Polyurethan-Dispersionen bzw. der daraus hergestellten Produkte werden diese Lösemittel freigesetzt und gelangen in die Umwelt. Der Prepolymer Mixing Process ist eine Eintopfsynthese, bei der alle Komponenten zusammengemischt und in einer Polyadditionsreaktion zu einem Polyurethan-Prepolymer umgesetzt werden, das anschließend neutralisiert, dispergiert und kettenverlängert wird. Dieses Verfahren ist nicht nur einfach und rationell, sondern bietet auch die Möglichkeit zur Herstellung von Polyurethan-Prepolymeren mit vielen synthetischen Variationen.

Bei dem sog. *Solvent Process* bzw. *Aceton-Verfahren* wird die gesamte Synthese der Polyurethan-Polymere in Gegenwart von großen Mengen an niedrigsiedenden und wasserlöslichen Solventien, wie bspw. Aceton oder Methylethylketon, durchgeführt (vgl. US 5 804 647, US 5 852 104, DE-OS 197 19 515, US 5 840 823 und EP-A 877 041). Die Solventien müssen nach der Herstellung der Polyurethan-Dispersion durch eine aufwendige und kostenintensive Destillation wieder entfernt werden, die resultierenden Polyurethan-Dispersionen sind daher weitgehend lösemittelfrei. Weitere Vorteile des *Solvent Process* sind die hohen Festkörpergehalte, die exzellenten Materialeigenschaften und die geringen Mengen der zur Stabilisierung der Polyurethan-Dispersionen benötigten, hydrophilen Gruppen. Der *Solvent Process* ist in seiner Durchführung kompliziert und wirtschaftlich nicht optimal, was gerade im Hinblick auf bauchemische Anwendungen einen großen Nachteil darstellt.

Außerdem gibt es noch verschiedene Kombinationen aus *Prepolymer Mixing Process* und *Solvent Process* (vgl. DE-OS 197 22 862), die ebenfalls nicht ganz unproblematisch sind. Der *Prepolymer Mixing Process* kann bspw. auch mit einem Gemisch aus niedrig- und hochsiedenden Solventien durchgeführt werden, wobei später nur der niedrig siedende Anteil destillativ entfernt wird. Beim *Solvent Process* kann bspw. auch der komplette Aufbau der Polyurethan-Dispersion in die wässrige Phase verlegt werden.

Der *Prepolymer Mixing Process* ist mit einigen gravierenden Nachteilen verbunden. Die mechanischen Eigenschaften (Dehnung, Zugfestigkeit, Härte) sind aufgrund der mehr oder weniger unkontrollierbaren Reaktionskinetik des Herstellungsverfahrens meist unbefriedigend. Zur Erzielung eines brauchbaren Eigenschaftsprofils werden im Gegensatz zum *Solvent Process* große Mengen an niedermolekularen Diolen benötigt, was wiederum einen erhöhten Bedarf an hydrophilen Gruppen nach sich zieht. Bei Verwendung großer Mengen an hydrophilen Gruppen (Trialkylammoniumcarboxylat) zur Stabilisierung-insbesondere bei hydrophoben polymeren Polyolen als *polyurethane backbones* -treten im Stadium der Dispergierung des Polyurethan-Prepolymers Probleme auf. Das im Gleichgewicht vorliegende Trialkylamin (Neutralisationsmittel) beschleunigt die Isocyanat/Wasser-Reaktion extrem, wodurch ein Großteil der freien Isocyanat-Gruppen in kurzer Zeit verloren geht. Die Verarbeitungszeit des Polyurethan-Prepolymers zwischen Beginn der Dispergierung und dem Ende der Kettenverlängerung mit Polyaminen wird somit drastisch eingeschränkt. Beim Überschreiten der Verarbeitungszeit wird das Kettenverlängerungsmittel unter Umständen nicht mehr vollständig eingebaut, der pH-Wert und die Viskosität der Polyurethan-Dispersion steigen stark an.

Der vorliegenden Erfindung lag daher die Aufgabe zugrunde, ein Verfahren zur Herstellung von wässrigen Polyurethan-Dispersionen zu entwickeln, welches die genannten Nachteile des Standes der Technik nicht aufweist, sondern in technisch einfacher und umweltschonender Weise realisiert werden kann.

Diese Aufgabe wurde erfindungsgemäß dadurch gelöst, dass man
a) zunächst eine Vormischung aus Polyol-Komponente (A), bestehend aus 5 bis 25 Gew.-Teilen von mindestens einem Diol (A) (i) mit einer Molmasse von 500 - 5000 Dalton, 0,5 bis 5 Gew.-Teilen von mindestens einem Polyhydroxyalkans (A) (ii) sowie 0 bis 5 Gew.-Teilen von mindestens einer anionisch modifizierbaren Dihydroxyalkancarbonsäure (A) (iii) und 0 bis 9 Gew.-Teilen einer Lösemittel-Komponente (B) herstellt,
b) 5 bis 50 Gew.-Teile einer Polyisocyanat-Komponente (C) mit 11 bis 39 Gew.-Teilen der Vormischung aus Stufe a) zu einem Polyurethan-Preaddukt umsetzt, wobei das NCO/OH-Equivalentverhältnis in dieser Stufe 1,75 bis 8,0 beträgt,
c) das Polyurethan-Preaddukt aus Stufe b) entweder mit 5 bis 33 Gew.-Teilen der Vormischung aus Stufe a) oder 0,5 bis 5 Gew.-Teilen einer anionisch modifizierbaren Dihydroxyalkancarbonsäure (A) (iii) zu einem Polyurethan-Prepolymer umsetzt, wobei das NCO/OH-Equivalentverhältnis in dieser Stufe 1,5 bis 8,0, insbesondere 1,5 bis 5,0 beträgt,
d) das Polyurethan-Prepolymer aus Stufe c) dann mit einem vorgefertigten Gemisch aus 5 bis 225 Gew.-Teilen Wasser, 0,5 bis 4 Gew.-Teilen einer Neutralisations-Komponente (D) und 0 bis 1 Gew.-Teilen einer Entschäumer-Komponente (E) vermischt und anschließend oder gleichzeitig
e) das wässrige Polyurethan-Prepolymer aus Stufe d) mit 0,025 bis 4 Gew.-Teilen einer Kettenverlängerungs-Komponente (F), die mit zuvor entnommenen Anteilen des Wassers aus Stufe d) im Verhältnis 1 : 10 bis 10 : 1 verdünnt wird, umsetzt.

Es hat sich nämlich überraschenderweise gezeigt, dass die auf Basis des erfindungsgemäßen Verfahrens hergestellten selbstemulgierbaren, wässrigen Polyurethan-Harze sich nicht nur durch ein kosteneffizientes und technisch einfaches Herstellungsverfahren und ausgezeichnete mechanische Eigenschaften (Zugfestigkeit, Dehnung, Härte) auszeichnen, sondern darüber hinaus auch noch gute anwendungstechnische Eigenschaften (Festkörpergehalt, Partikelgröße, Viskosität) und Verbesserungen in der Stabilität aufweisen, was ebenfalls nicht vorhersehbar war.

Das erfindungsgemäße Verfahren zur Herstellung von selbstemulgierbaren, wässrigen Polyurethan-Harzen arbeitet nach einem mehrfach modifizierten *Prepolymer Mixing Process* und ist definiert durch seinen schrittweisen Aufbau. Die Durchführung dieses Syntheseverfahrens erfolgt unter Anwendung der in der Polyurethan-Chemie üblichen Techniken.

In der Reaktionsstufe a) wird zunächst eine Vormischung einer Polyol-Komponente (A), bestehend aus 5 bis 25 Gew.-Teilen eines Diols (A) (i) mit einer Molmasse von 500 bis 5000 Dalton, 0,5 bis 5 Gew.-Teilen eines Polyhydroxyalkans (A) (ii) sowie 0 bis 5 Gew.-Teilen einer anionisch modifizierbaren Dihydroxyalkancarbonsäure (A) (iii), und 0 bis 9 Gew.-Teilen einer Lösemittel-Komponente (B) hergestellt. Die Durchführung der Reaktionsstufe a) ist im Hinblick auf die Reaktionsbedingungen relativ unproblematisch. Die Komponenten (A) (i), (A) (ii) sowie ggf. (A) (iii) und (B) werden in beliebiger Reihenfolge zugegeben und vermischt, bis eine homogene Lösung vorliegt. Die Reaktionsstufe a) wird bei einer bevorzugten Temperatur von 20 bis 120 °C, insbesondere bei 60 bis 80°C, durchgeführt.

Die Komponente (A) (i) mit einem Anteil von 5 bis 25 Gew.-Teilen besteht aus mindestens einem höhermolekularen Diol mit zwei gegenüber Polyisocyanaten reaktiven Hydroxyl-Gruppen und einer mittleren Molekularmasse (Zahlenmittel Mₙ) von 500 bis 5 000 Dalton, insbesondere 1 000 bis 4 000 Dalton, und zwar insbesondere auf Basis eines Polyether-, Polyester-, α,ω-Polymethacrylat-Diols oder Gemischen daraus. Dabei handelt es sich vorzugsweise um polymere Diole wie Polyalkylenglykole, aliphatische oder aromatische Polyester, Polycaprolactone, Polycarbonate, Makromonomere, Telechele oder Epoxid-Harze oder Gemische daraus. Polyalkylenglykole werden aus Monomeren wie Ethylenoxid, Propylenoxid, Butylenoxid, Tetrahydrofuran durch Polymerisation in Gegenwart von Bortrifluorid oder durch Polyaddition an Starterverbindungen mit reaktiven Wasserstoffatomen wie Wasser, Alkohole, Amine oder Bisphenol A erhalten. Dabei können auch Gemische der Monomeren gleichzeitig oder nacheinander eingesetzt werden. Als geeignete Polyalkylenglykole können bspw. Polyethylenglykole, Polypropylenglykole (z.B. Voranol®-Typen der Fa. Dow, Acclaim®-Typen der Fa. Arco Chemical), gemischte Polyglykole auf Basis Ethylenoxid und Propylenoxid sowie Polytetramethylenglykole bzw. Polytetrahydrofurane (z.B. PolyTHF 2000 der Fa. BASF) verwendet werden. Bevorzugt werden lineare bzw. difunktionelle Polypropylenglykole mit einer mittleren Molekularmasse (Zahlenmittel Mₙ) von 1 000 bis 4 000 Dalton eingesetzt.
Aliphatische oder aromatische Polyester-Diole werden durch Polykondensationsreaktion und/oder Polyadditionsreaktion aus zwei- oder mehrwertigen Alkoholen und zwei- oder mehrwertigen Carbonsäuren, Carbonsäureanhydriden oder Carbonsäureestern erhalten. Als geeignete aliphatische oder aromatische Polyester können bspw. Kondensate auf Basis von 1,2-Ethandiol bzw. Ethylenglykol, 1,4-Butandiol bzw. 1,4-Butylenglykol, 1,6-Hexandiol bzw. 1,6-Hexamethylenglykol und 2,2-Dimethyl-1,3-propandiol bzw. Neopentylglykol sowie 1,6-Hexandisäure bzw. Adipinsäure und 1,3-Benzoldicarbonsäure bzw. Isophthalsäure (z.B. Bester-Typen der Fa. Poliolchimica) eingesetzt werden. Polycaprolactone (z.B. Capa-Typen der Fa. Solvay Interox) und Polycarbonate (z.B. Desmophen C 200 der Fa. Bayer) sind ebenfalls zur Gruppe der Polyester zugehörig. Erstere werden durch Umsetzung von Phosgen bzw. aliphatischen oder aromatischen Carbonaten, wie bspw. Diphenylcarbonat oder Diethylcarbonat, mit zwei- oder mehrwertigen Alkoholen erhalten. Letztere werden durch Polyaddition von Lactonen, wie bspw. ε-Caprolacton, an Starterverbindungen mit reaktiven Wasserstoffatomen wie Wasser, Alkohole, Amine oder Bisphenol A hergestellt. Denkbar sind auch synthetische Kombinationen von Polyestern, Polycaprolactonen und Polycarbonaten. Bevorzugt werden lineare bzw. difunktionelle aliphatische oder aromatische Polyester-Polyole mit einer mittleren Molekularmasse (Zahlenmittel Mₙ) von 1 000 bis 4 000 Dalton.

Ebenfalls geeignet sind Makromonomere, Telechele oder Epoxid-Harze. Als geeignete Makromonomere und Telechele können Polyhydroxyolefine, wie bspw. α,ω-Dihydroxypolybutadiene α,β-Dihydroxypoly(meth)acrylate, α,ω-Dihydroxypoly(meth)acrylate oder α,ω- Dihydroxypolysiloxane, eingesetzt werden. Bevorzugt werden α,ω-Dihydroxypolyolefine, wie bspw. α,ω-Poly(methylmethacrylat)-Diol (Handelsname: TEGO® Diol MD-1000) der Molekularmasse 1000 Dalton, α,ω-Poly(n-butylmethacrylat)-Diole der Molekularmasse 1000 und 2000 Dalton (Handelsname: TEGO® Diol BD-1000, TEGO® Diol BD-2000) oder α,ω-Poly(2-ethylhexylmethacrylat)-Diol (Handelsname: TEGO® Diol OD-2000) der Firma Tego Chemie Service GmbH. Bei den Epoxid-Harzen handelt es sich vorzugsweise um hydroxyfunktionelle Derivate des Bisphenol-A-diglycidethers (BADGE).
Vorzugsweise werden also lineare bzw. difunktionelle aliphatische oder aromatische Polyalkylenglykole, Polyesterpolyole und α,ω-Dihydroxypolyolefine mit einer mittleren Molekularmasse (Zahlenmittel Mₙ) von 1 000 bis 4 000 Dalton eingesetzt.

Die Komponente (A) (ii) mit einem Anteil von 0,5 bis 5 Gew.-Teilen besteht aus mindestens einem niedermolekularen Polyhydroxyalkan mit zwei oder mehreren gegenüber Polyisocyanaten reaktiven Hydroxyl-Gruppen und einer Molekularmasse von 50 bis 500 Dalton. Als geeignete niedermolekulare Polyhydroxyalkane können bspw. 1,2-Ethandiol bzw. Ethylenglykol, 1,2-Propandiol bzw. 1,2-Propylenglykol, 1,3-Propandiol bzw. 1,3-Propylenglykol, 1,4-Butandiol bzw. 1,4-Butylenglykol, 1,6-Hexandiol bzw. 1,6-Hexamethylenglykol, 2-Methyl-1,3-propandiol (Handelsname MPDiol Glycol® der Fa. Arco Chemical), 2,2-Dimethyl-1,3-propandiol bzw. Neopentylglykol, 1,4-Bis-(hydroxymethyl)-cyclohexan bzw. Cyclohexandimethanol, 1,2,3-Propantriol bzw. Glycerol, 2-Hydroxymethyl-2-methyl-1,3-propanol bzw. Trimethylolethan, 2-Ethyl-2-hydroxymethyl-1,3-propandiol bzw. Trimethylolpropan, 2,2-Bis-(hydroxymethyl)-1,3-propandiol bzw. Pentaerythrit eingesetzt werden.

Die Komponente (A) (iii) mit einem Anteil von 0 bis 5 Gew.-Teilen besteht aus mindestens einer niedermolekularen und anionisch modifizierbaren Dihydroxyalkancarbonsäure mit zwei gegenüber Polyisocyanaten reaktiven Hydroxyl-Gruppen und einer oder mehreren gegenüber Polyisocyanaten inerten Carboxyl-Gruppen, die in Gegenwart von Basen ganz oder teilweise in Carboxylat-Gruppen überführt werden können. Als niedermolekulare und anionisch modifizierbare Dihydroxyalkancarbonsäuren können bspw. 2-Hydroxymethyl-3-hydroxypropansäure bzw. Dimethylolessigsäure, 2-Hydroxymethyl-2-methyl-3-hydroxypropansäure bzw. Dimethylolpropionsäure, 2-Hydroxymethyl-2-ethyl-3-hydroxypropansäure bzw. Dimethylolbuttersäure, 2-Hydroxymethyl-2-propyl-3-hydroxypropansäure bzw. Dimethylolvaleriansäure, eingesetzt werden. Bevorzugt werden Bishydroxyalkancarbonsäuren mit einer Molekularmasse von 100 bis 200 Dalton eingesetzt und vorzugsweise Dimethylolpropionsäure (Handelsname DMPA® der Fa. Mallinckrodt).

Die Lösemittel-Komponente (B) mit einem Anteil von 0 bis 9 Gew.-Teilen besteht aus mindestens einem, gegenüber Polyisocyanaten inerten und mit Wasser ganz oder teilweise mischbaren Solvens, das nach der Herstellung in der Polyurethan-Dispersion verbleibt oder durch Destillation ganz oder teilweise entfernt wird. Solventien, die nach der Herstellung in der Dispersion verbleiben, fungieren als Koaleszenz-Hilfsmittel. Geeignete Solventien sind beispielsweise hochsiedende Lösemittel wie N-Methylpyrrolidon, Dipropylenglykoldimethylether (Proglyde DMM® der Fa. Dow), niedrigsiedende Lösemittel wie Aceton, Butanon oder beliebige Gemische daraus. Bevorzugt werden hochsiedende und hydrophile organische Lösemittel mit einem Siedepunkt über 180 °C (Normaldruck) und vorzugsweise N-Methylpyrrolidon verwendet.

In der Reaktionsstufe b) werden 11 bis 39 Gew.-Teile der Vormischung aus Stufe a) mit 5 bis 50 Gew.-Teilen einer Polyisocyanat-Komponente (C) zu einem Polyurethan-Preaddukt umgesetzt, wobei das NCO/OH-Equivalentverhältnis in dieser Stufe 1,75 bis 8,0 beträgt. Das NCO/OH-Equivalentverhältnis der Komponenten (C) und (A) wird in Reaktionsstufe b) vorzugsweise auf einen Wert von 2,5 bis 4,0 eingestellt. Die Durchführung der Reaktionsstufe b) ist im Hinblick auf die Reaktionsbedingungen relativ unkritisch. Die Bildung des Polyurethan-Preaddukts erfolgt in der Weise, dass die Komponente (C) innerhalb eines Zeitraumes von einigen Minuten mit einem Teil der Vormischung aus Reaktionsstufe a) bestehend aus den Komponenten (A) (i), (A) (ii) und ggf. (A) (iii) sowie (B) versetzt wird. Die Reaktionsstufe b) wird bei einer bevorzugten Temperatur von 60 bis 120 °C, insbesondere bei 80 bis 100 °C, durchgeführt. Aufgrund des großen Überschusses der Polyisocyanat-Komponente (C) gegenüber der Polyol-Komponente (A) kann in der Reaktionsstufe b) je nach Viskosität mit sehr wenig bzw. ohne Lösemittel gearbeitet werden. Es ergeben sich streng NCOterminierte kurzkettige Polyurethan-Preaddukte.

Die Polyisocyanat-Komponente (C) besteht aus mindestens einem Polyisocyanat. Polyisocyanat-Derivat oder Polyisocyanat-Homologen mit zwei oder mehreren aliphatischen oder aromatischen Isocyanat-Gruppen. Geeignet sind insbesondere die in der Polyurethan-Chemie hinreichend bekannten Polyisocyanate oder Kombinationen daraus. Als geeignete aliphatische Diisocyanate können bspw. 1.6-Düsocyanatohexan (HDI), 1-Isocyanato-5-isocyanatomethyl-3,3,5-trimethylcyclohexan bzw. Isophorondiisocyanat (IPDI), Bis-(4-isocyanatocyclo-hexyl)-methan (H₁₂MDI), 1,3-Bis-(1-isocyanato-1-methyl-ethyl)-benzol (m-TMXDI) bzw. technische Isomerengemische der einzelnen aromatischen Polyisocyanate eingesetzt werden. Als geeignete aromatische Diisocyanate können beispielsweise 2,4-Diisocyanatoluol bzw. Toluoldiisocyanat (TDI), Bis-(4-isocyanatophenyl)-methan (MDI) und ggf. dessen höhere Homologe (Polymeric MDI) bzw. technische Isomerengemische der einzelnen aromatischen Polyisocyanate eingesetzt werden. Weiterhin sind auch die sogenannten ''Lackpolyisocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethyl-cyclohexan (IPDI) grundsätzlich geeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Restgehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Vorzugsweise wird als aliphatisches Polyisocyanat Isophorondiisocyanat eingesetzt.

In der Reaktionsstufe c) wird das Polyurethan-Preaddukt aus Stufe b) dann entweder mit 5 bis 33 Gew.-Teilen der Vormischung aus Stufe a) oder 0,5 bis 5 Gew.-Teilen der anionisch modifizierbaren Dihydroxyalkancarbonsäure (A) (iii) zu einem Polyurethan-Prepolymer umgesetzt, wobei das NCO/OH-Equivalentverhältnis in dieser Stufe 1,5 bis 8,0 beträgt. Das NCO/OH-Equivalentverhältnis des Polyurethan-Preadduktes aus Stufe b) und der Komponente (A) wird in Reaktionsstufe c) vorzugsweise auf einen Wert von 1,6 bis 3,0 eingestellt. Die Bildung des Polyurethan-Prepolymers erfolgt in der Weise, dass das Polyurethan-Preaddukt aus Stufe b) innerhalb eines Zeitraumes von einigen Minuten mit dem Rest der Vormischung aus Stufe a) bestehend aus den Komponenten (A) (i), (A) (ii), A) (iii) und ggf. (B) versetzt wird. Das in Reaktionsstufe c) eingesetzte Polyurethan-Preaddukt aus Reaktionsstufe b) kann bei entsprechender Prozessführung bzw. unvollständiger Umsetzung neben Isocyanat-Gruppen ggf. auch noch freie Hydroxyl-Gruppen aufweisen. Die Reaktionsstufe c) wird bei einer bevorzugten Temperatur von 60 bis 120 °C, insbesondere bei 80 bis 100 °C, durchgeführt.

Das bevorzugte NCO/OH-Equivalent-Verhältnis der Gesamtmenge der Komponenten (A) (Polyole) und (C) (Polyisocyanate) wird auf einen bevorzugten Wert von 1,2 bis 2,2, insbesondere 1,4 bis 2,0, eingestellt.

Die Umsetzung der Komponenten (A) und (C) in den Reaktionsstufe b) und c) kann in Gegenwart eines für Polyadditionsreaktionen an Polyisocyanaten üblichen Katalysatorsystems erfolgen. Bei Bedarf erfolgt ein Zusatz dieser Katalysatoren in Mengen von 0,01 bis 1 Gew.-Teilen bezogen auf den Reaktionsansatz.
Gebräuchliche Katalysatoren für Polyadditionsreaktionen an Polyisocyanate sind bspw. Dibutylzinnoxid, Dibutylzinndilaurat (DBTL), Triethylamin, Zinn(II)-octoat, 1,4-Diaza-bicyclo[2,2,2]octan (DABCO), 1,4-Diaza-bicyclo[3,2,0]-5-nonen (DBN), 1,5-Diaza-bicyclo[5,4,0]-7-undecen (DBU).

In den Reaktionsstufen b) und c) wird der Reaktionsansatz unter Ausnutzung der Exothermie der Polyadditionsreaktion bis zum Erreichen des berechneten bzw. theoretischen NCO-Gehaltes vorzugsweise unter Inertgasatmosphäre gerührt. Die erforderlichen Reaktionszeiten liegen im Bereich von wenigen Stunden und werden durch Reaktionsparameter wie die Reaktivität der Komponenten, die Stöchiometrie der Komponenten und die Temperatur maßgebend beeinflußt.

Gemäß einer bevorzugten Ausführungsform wird die Herstellung des Polyurethan-Prepolymers so durchgeführt, dass in Stufe a) eine Vormischung der Komponente (A) (i), (A) (ii), (A) (iii) und ggf. (B) hergestellt wird und die Vormischung aus Stufe a) dann in der Stufe b) und c) eingesetzt wird.

Alternativ dazu wird in Stufe a) eine Vormischung der Komponente (A) (i), (A) (ii) und ggf. (B) hergestellt, die Vormischung aus Stufe a) dann in Stufe b) vollständig eingesetzt und die Komponente (A) (iii) erst in Stufe c) umgesetzt.

Diese mehrstufige Zugabe der Polyol-Komponente führt aufgrund der wechselnden NCO/OH-Equivalentverhältnisse während der Polyadditionsreaktion zu einer anderen Reaktionskinetik und somit zu einem anderen Aufbau des Polyurethan-Polymers als beim konventionellen *Prepolymer Mixing Process* nach dem Eintopfverfahren. Bei geeigneter Prozessführung und Verwendung von Diisocyanaten mit Isocyanat-Gruppen unterschiedlicher Reaktivität werden weitgehend symmetrische Polyurethan-Preaddukte und Polyurethan-Prepolymere erhalten, in denen die Hydroxyl-Gruppen der einzelnen Polyole mit Isocyanat-Gruppen gleicher Reaktivität zur Umsetzung kommen. Unter geeigneter Prozessführung ist in diesem Zusammenhang insbesondere die Aufteilung der in Reaktionsstufe a) hergestellten Vormischung auf die Reaktionsstufen b) und c) zu verstehen. Diisocyanate mit Isocyanat-Gruppen unterschiedlicher Reaktivität liefern zudem engere Molekularmassen-verteilungen mit geringerer Uneinheitlichkeit. Dementsprechend werden Polyurethan-Preaddukte und Polyurethan-Prepolymere mit linearer Struktur bevorzugt, die sich aus Diol- und Diisocyanat-Komponenten zusammensetzen. Die Ausbildung dieser symmetrischen Segmentstrukturen wird durch die milde Temperaturführung während der Polyadditionsreaktion begünstigt. In den Reaktionsstufen b) und c) ist jeweils nur eine schwache Exothermie der Polyadditionsreaktion beobachtbar, die Reaktionstemperatur steigt endogen nicht über 90 °C an. Dadurch können auch unerwünschte Nebenreaktionen der NCO-Gruppen z.B. mit den Carboxylat-Gruppen ohne besondere Temperaturkontrolle auf einfache Weise unterdrückt werden.

Die Viskosität der Polyurethan-Prepolymere ist relativ niedrig und weitgehend unabhängig von der Struktur der verwendeten Polyol- und PolyisocyanatKomponenten. Ein Zusatz von Lösemitteln zur Viskositätsverminderung oder zur Verbesserung der Dispergiereigenschaften der Polyurethan-Prepolymere ist daher nur in geringen Mengen erforderlich. Die besondere Struktur der Polyurethan-Prepolymere ermöglicht nachfolgend die Herstellung von Produkten mit außerordentlich guten mechanischen Eigenschaften und vergleichsweise hohen Festkörpergehalten. Außerdem werden aufgrund der gleichmäßigen Verteilung der Carboxyl- bzw. Carboxylat-Gruppen über das Polyurethan-Polymer nur moderate Ladungsdichten für die Stabilisierung der entsprechenden Polyurethan-Dispersionen benötigt.

In der Reaktionsstufe d) wird das Polyurethan-Prepolymer aus Stufe c) mit einem vorgefertigten Gemisch, bestehend aus 5 bis 225 Gew.-Teilen Wasser, 0,5 bis 4 Gew.-Teilen einer Neutralisations-Komponente (D) und 0 bis 1,0 Gew.-Teilen einer Entschäumer-Komponente (E) vermischt. Die Reaktionsstufe d) wird bei einer Temperatur von 20 bis 80 °C , vorzugsweise bei 40 bis 60 °C durchgeführt. Die Neutralisations-Komponente (D) wird gemäß einer bevorzugten Ausführungsform in einer solchen Menge eingesetzt, dass der Neutralisationsgrad bezogen auf die freien Carboxyl-Gruppen des Polyurethan-Prepolymers bei 70 bis 100 Equivalent-%, vorzugsweise bei 80 bis 100 Equivalent-%, liegt. Die Neutralisations-Komponente (D) wird zur vollständigen oder teilweisen Neutralisation der Carboxyl-Gruppen im Dispergiermedium vorgelegt (indirekte Neutralisation). Bei der Neutralisation werden aus den Carboxyl-Gruppen Carboxylat-Gruppen gebildet, die zur anionischen Modifizierung bzw. Stabilisierung der Polyurethan-Dispersion dienen. Alternativ dazu kann das Polyurethan-Prepolymer aus Reaktionsstufe c) ggf. auch in das vorgefertigte Gemisch aus Wasser, der Neutralisations-Komponente (D) und der Entschäumer-Komponente (E) eingerührt werden oder die Neutralisations-Komponente (D) ggf. auch bereits nach Reaktionsstufe c) in das Polyurethan-Prepolymer eingerührt werden (direkte Neutralisation).
Alle kationischen Gegenionen zu den anionischen Carboxylat-Gruppen sind im Dispergiermedium gelöst. Die Begriffe "Dispergierung" bzw. "Dispersion" beinhalten, dass neben dispergierten Komponenten mit mizellarer Struktur auch solvatisierte und/oder suspendierte Komponenten enthalten sein können.

Die Neutralisierungs-Komponente (D) mit einem Anteil von 0,5 bis 4 Gew.-Teilen besteht aus einer oder mehreren Basen, die zur vollständigen oder teilweisen Neutralisation der Carboxyl-Gruppen dienen. Als geeignete Basen können tertiäre Amine wie N,N-Dimethylethanolamin, N-Methyldiethanolamin, Triethanolamin, N,N-Dimethylisopropanolamin, N-Methyldiisopropanolamin, Triisopropylamin, N-Methylmorpholin, N-Ethylmorpholin, Triethylamin oder Ammoniak sowie Alkalihydroxide (NaOH, KOH) verwendet werden. Bevorzugt werden tertiäre Amine und insbesondere Triethylamin eingesetzt.

Die Entschäumer-Komponente (E) mit einem Anteil von 0 bis 1 Gew.-Teilen besteht aus einem oder mehreren für Polyurethan-Dispersionen üblichen Entschäumern, die zur Entgasung (Luft, Kohlendioxid) dienen und der Schaumbildung entgegenwirken. Erhärteter Schaum ist nicht redispergierbar und setzt sich ansonsten in Form von feinen Nadeln als Niederschlag ab. Geeignete Entschäumer sind bspw. Produkte der Firmen Tego Chemie Service GmbH (Typen TEGO® Airex 901 W, TEGO® Foamex 1488), Byk Chemie (Typen Byk 011, 019, 021, 022, 023, 024, 025, 026, 028, 080) oder Condea (SERDAS GBR).

Nach Erreichen des theoretischen Gesamt-NCO-Gehalts wird das Polyurethan-Prepolymer nicht in Wasser dispergiert, wie bei den in der Patentliteratur oft beschriebenen Verfahren (vgl. Patentschriften US 5 907 012, US 5 900 457, US 5 750 630). sondern gemäß einer bevorzugten Ausführungsform im Reaktionsgefäß mit einer Mischung aus Wasser, einer Neutralisations-Komponente und einer Entschäumer-Komponente ohne Scherkräfte zunächst überschichtet und schließlich mit Hilfe eines Dissolvers unter intensivem Rühren binnen weniger Minuten vollständig dispergiert. Diese Vorgehensweise hat den Vorteil, dass im Reaktionsgefäß selbst dispergiert werden kann und sogar Polyurethan-Prepolymere von hoher Viskosität extrem leicht zu verarbeiten sind. Das Polyurethan-Prepolymer wird hierbei nicht langsam in das Dispergiermedium eingebracht, sondern mit der Gesamtmenge an Dispergiermedium überschichtet und dann sofort verrührt. Alternativ zu dieser Vorgehensweise kann das Polyurethan-Prepolymer aus Stufe c) in das vorgefertigte Gemisch aus Wasser, der Neutralisationskomponente (D) und der Entschäumer-Komponente (E) eingemischt werden.

Bei Verwendung identischer Rezepturen führt das erfindungsgemäße Verfahren aus mehrstufiger Prepolymersynthese und Inversverfahren im Vergleich mit dem *Prepolymer Mixing Process* zu Polyurethan-Dispersionen mit etwas höheren Festkörpergehalten und verbesserten mechanischen Eigenschaften. Ein weiterer Vorteil der Dispergiermethode durch Überschichten des Polyurethan-Prepolymer-Harzes mit dem Dispergiermedium liegt in der besonders hohen Effizienz, mit der das Polyurethan-Prepolymer vollständig in die wässrige Phase gebracht wird. Im Reaktor oder den Rohrleitungen verbleiben somit keine Rückstände an Polyurethan-Prepolymer, die Reinigung wird daher erheblich erleichtert.

In der Reaktionsstufe e) wird die Polyurethan-Prepolymer-Dispersion aus Reaktionsstufe d) mit 0,025 bis 4 Gew.-Teilen einer Kettenverlängerungs-Komponente (F) umgesetzt. Die Reaktionsstufe e) wird bei einer Temperatur von 20 bis 80 °C , vorzugsweise bei 30 bis 50 °C durchgeführt. Die Kettenverlängerungs-Komponente (F) wird gemäß einer bevorzugten Ausführungsform in einer solchen Menge eingesetzt, dass der Kettenverlängerungsgrad bezogen auf die freien Isocyanat-Gruppen des Polyurethan-Prepolymers bei 10 bis 100 Equivalent-%, vorzugsweise bei 50 bis 100 Equivalent-%, liegt. Die Kettenverlängerungs-Komponente (F) wird in der Reaktionsstufe e) im Verhältnis 1 : 10 bis 10 : 1 in vorab entnommenen Anteilen des Dispergiermediums gelöst und anschließend zugegeben. Die Kettenverlängerung der Polyurethan-Prepolymer-Dispersion führt zum Aufbau der Molekularmasse innerhalb der Mizellen und zur Bildung einer Polyurethan-Polyharnstoff-Dispersion hoher Molekularmasse. Die Kettenverlängerungs-Komponente (F) reagiert dabei mit reaktiven Isocyanat-Gruppen wesentlich rascher als Wasser. Im Anschluss an die Reaktionsstufe e) können evtl. noch vorhandene freie Isocyanat-Gruppen mit Wasser vollständig kettenverlängert werden. Alternativ dazu kann die Kettenverlängerungs-Komponente (F) ggf. auch bereits in Reaktionsstufe d) als vorgefertigtes Gemisch mit Wasser, der Neutralisations-Komponente (D) und der Entschäumer-Komponente (E) verwendet werden.

Die Kettenverlängerungs-Komponente (F) besteht aus mindestens einem Polyamin mit zwei oder mehreren gegenüber Polyisocyanaten reaktiven Amino-Gruppen. Geeignete Polyamine sind beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS) und Ethylendiamin, Addukte aus Salzen der (Meth)acrylsäure und Ethylendiamin oder beliebige Kombinationen dieser Polyamine. Bevorzugt werden difunktionelle primäre Amine und insbesondere Ethylendiamin eingesetzt.

Die Verarbeitungszeit zwischen dem Abschluss der Stufe c) und dem Abschluss der Stufe e) beträgt vorzugsweise weniger als 1 Stunde, insbesondere weniger als 30 Minuten.

Der Festkörpergehalt an Polyurethan-Polymer bestehend aus den Komponenten (A), (C), (D) und (F) wird insbesondere auf 20 bis 50 Gew.-Teilen, vorzugsweise auf 30 bis 40 Gew.-Teilen, bezogen auf die Gesamtmenge der reinen Polyurethan-Dispersion eingestellt.

Der Gehalt an Carboxylat-Gruppen im Polyurethan-Polymer bestehend aus den Komponenten (A), (C), (D) und (F) wird insbesondere auf 10 bis 50 meq·(100 g)⁻¹, vorzugsweise auf 15 bis 35 meq·(100 g)⁻¹, eingestellt.

Die mittlere Partikelgröße der Mizellen des Polyurethan-Polymers bestehend aus den Komponenten (A), (C), (D) und (F) beträgt insbesondere 100 bis 500 nm, vorzugsweise 200 bis 400 nm. Die entsprechenden Angaben beziehen sich auf Messungen mit Hilfe der Photonenkorrelationsspektroskopie (PCS).

Das Polyurethan-Polymer weist in der Regel eine mittlere Molekularmasse von 25 000 bis 250 000 Dalton auf. Die entsprechenden Angaben beziehen sich auf das Zahlenmittel Mₙ und Messungen mit Hilfe der Gelpermeationschromatographie (GPC).

Das erfindungsgemäße Verfahren stellt eine universelle Methode zur Herstellung von maßgeschneiderten selbstemulgierbaren wässrigen Polyurethan-Harzen dar. Die geringen technischen Anforderungen des Verfahrens ermöglichen einen hohen Durchsatz und eine einfache Durchführbarkeit bei gleichzeitig niedrigen Kosten. Hervorzuheben sind außerdem die Reproduzierbarkeit des Verfahrens und die Lagerstabilität der Produkte. Außerdem können Polyurethan-Prepolymere von hoher Viskosität einfach dispergiert werden. Für eine Herstellung in der Technik wird nur eine einfache Polymerisationsapparatur bestehend aus einem Rührkessel und einem Dissolver benötigt. Diese Konfiguration entspricht dem *Prepolymer Mixing Process.*

Bei vergleichbaren Rezepturen zeichnet sich das erfindungsgemäße Verfahren zur Herstellung von selbstemulgierbaren wässrigen Polyurethan-Harzen gegenüber konventionellen Verfahren durch höhere Festkörpergehalte, niedrigere Viskositäten, ausgezeichnete Materialeigenschaften (wie z. B. Dehnung, Zugfestigkeit und Härte) und seine relativ einfache technische Durchführbarkeit aus.

Die erfindungsgemäßen selbstemulgierbaren, wässrigen Polyurethan-Harze können im Baubereich als Bindemittel für einkomponentige und zweikomponentige Beschichtungen, Dichtstoffe, Klebstoffe, Lacke oder Membranen, Sportbodenbeläge und Versiegelungen für die Oberflächen von mineralischen Baustoffen wie Beton, Gips, Zement, sowie Glas, Holz, Papier, Metall oder Kunststoff, eingesetzt werden. Die Applikation der erfindungsgemäßen selbstemulgierbaren wässrigen Polyurethan-Harze und der daraus hergestellten bauchemischen Produkte erfolgt mit den aus der Beschichtungstechnologie bekannten Methoden, wie z.B. Fluten, Gießen, Rakeln, Spritzen, Streichen, Tauchen, Walzen.

Die nachfolgenden Beispiele sollen die Erfindung näher veranschaulichen.

### Beispiel 1

### Polyurethan-Dispersion auf Basis eines Polypropylenglykols der Molekularmasse 2 000 Dalton

### Variante 1A (Vergleichsbeispiel)

In einem Vierhalskolben ausgerüstet mit KPG-Rührer, Rückflußkühler, Thermometer und Stickstoffdeckung wurde ein homogenes Polyol-Gemisch, bestehend aus 100,00 g eines Polypropylenglykols (Handelsname: Voranol P 2000 der Fa. Dow Chemical), 6,00 g 2-Methyl-1,3-propandiol (Handelsname MPDiol Glycol® der Fa. Arco Chemical), 3,00 g Trimethylolpropan (Fa. Aldrich), 6,50 g Dimethylolpropionsäure (Handelsname: DMPA® der Fa. Mallinckrodt) und 30,00 g N-Methylpyrrolidon (Fa. Aldrich) bei einer Temperatur von 70 bis 80 °C hergestellt. Anschließend wurden 61,77 g Isophorondiisocyanat versetzt. Die Mischung wurde unter Stickstoffdeckung bei 80 bis 90 °C bis zum Abklingen der Exothermie und bis zum Erreichen des berechneten NCO-Gehalts (Theorie: 3,22 Gew.-%; NCO/OH = 1,40) gerührt. Der Verlauf der Reaktion wurde acidimetrisch verfolgt. 180,00 g des Prepolymers wurden dann unter intensivem Rühren in ein Gemisch aus 222,29 g Wasser, 4,26 g Triethylamin (100 Equivalent-%) (indirekte Neutralisation) und 0,71 g Entschäumer BYK 024 dispergiert. Zum Aufbau der Polyurethan-Dispersion wurde mit einem Gemisch aus 2,90 g Ethylendiamin (70 Equivalent-%) und 14,52 g Wasser kettenverlängert.

Es wurde eine stabile, transluzente Polyurethan-Dispersion erhalten. Die Daten und Materialeigenschaften der Polyurethan-Dispersion aus Beispiel 1A sind in Tabelle 1 zusammengefasst.

### Variante 1B (Erfindung)

In einem Vierhalskolben ausgerüstet mit KPG-Rührer, Rückflußkühler, Thermometer und Stickstoffdeckung wurde ein homogenes Polyol-Gemisch, bestehend aus 100,00 g eines Polypropylenglykols (Handelsname: Voranol P 2000 der Fa. Dow Chemical), 6,00 g 2-Methyl-1,3-propandiol (Handelsname MPDiol Glycol® der Fa. Arco Chemical), 3,00 g Trimethylolpropan (Fa. Aldrich), 6,50 g Dimethylolpropionsäure (Handelsname: DMPA® der Fa. Mallinckrodt) und 30,00 g N-Methylpyrrolidon (Fa. Aldrich) bei einer Temperatur von 70 bis 80 °C hergestellt. Anschließend wurden 61,77 g Isophorondiisocyanat mit 76,0 g des vorher hergestellten Polyol-Gemisches versetzt. Diese Mischung wurde unter Stickstoffdeckung bei 80 bis 90 °C bis zum Abklingen der schwachen Exothermie und bis zum Erreichen des berechneten NCO-Gehalts (NCO/OH = 2,68) dieser Reaktionsstufe, gerührt. Nach der Zugabe der zweiten Hälfte (69,5 g) des Polyol-Gemisches wurde unter Stickstoffdeckung bei 80 bis 90 °C gerührt, bis der berechnete NCO-Gehalt dieser Reaktionsstufe (NCO/OH = 1,84) bzw. der NCO-Gehalt der gesamten Reaktion (Theorie: 3,22 Gew.-%; NCO/OH = 1,40) erreicht wurde. Der Verlauf der Reaktion wurde acidimetrisch verfolgt.
180,00 g des Prepolymers wurden dann unter intensivem Rühren in ein Gemisch aus 222,29 g Wasser, 4,26 g Triethylamin (100 Equivalent-%) (indirekte Neutralisation) und 0,71 g Entschäumer BYK 024 dispergiert. Zum Aufbau der Polyurethan-Dispersion wurde mit einem Gemisch aus 2,90 g Ethylendiamin (70 Equivalent-%) und 14,52 g Wasser kettenverlängert.

Es wurde eine stabile, transluzente Polyurethan-Dispersion erhalten. Die Daten und Materialeigenschaften der Polyurethan-Dispersion aus Beispiel 1B sind in Tabelle 1 zusammengefasst.

### Variante 1C (Erfindung)

In einem Vierhalskolben ausgerüstet mit KPG-Rührer, Rückflußkühler, Thermometer und Stickstoffdeckung wurde ein homogenes Polyol-Gemisch, bestehend aus 100,00 g eines Polypropylenglykols (Handelsname: Voranol P 2000 der Fa. Dow Chemical), 6,00 g 2-Methyl-1,3-propandiol (Handelsname MPDiol Glycol® der Fa. Arco Chemical), 6,50 g Dimethylolpropionsäure (Handelsname: DMPA® der Fa. Mallinckrodt) und 20,00 g N-Methylpyrrolidon (Fa. Aldrich) bei einer Temperatur von 70 bis 80 °C hergestellt. Anschließend wurden 61,77 g Isophorondiisocyanat mit 61 g des vorher hergestellten Polyol-Gemisches versetzt. Diese Mischung wurde unter Stickstoffdeckung bei 80 bis 90 °C bis zum Abklingen der schwachen Exothermie und bis zum Erreichen des berechneten NCO-Gehalts (NCO/OH = 3,11) dieser Reaktionsstufe, gerührt. Nach der Zugabe der übrigen 74,5 g des Polyol-Gemisches wurde unter Stickstoffdeckung bei 80 bis 90 °C gerührt, bis der berechnete NCO-Gehalt dieser Reaktionsstufe (NCO/OH = 1,73) bzw. der NCO-Gehalt der gesamten Reaktion (Theorie: 3,38 Gew.-%; NCO/OH = 1,40) erreicht wurde. Der Verlauf der Reaktion wurde acidimetrisch verfolgt.
197,27 g des Prepolymers wurden dann - ohne Rührwirkung - mit einem Gemisch aus 230,27 g Wasser, 4,90 g Triethylamin (100 Equivalent-%) (indirekte Neutralisation) und 0,74 g Entschäumer BYK 024 überschichtet und anschließend unter intensivem Rühren im Dissolver binnen 1 Minute vollständig dispergiert. Zum Aufbau der Polyurethan-Dispersion wurde mit einem Gemisch aus 3,34 g Ethylendiamin (70 Equivalent-%) und 16,68 g Wasser kettenverlängert.

Es wurde eine stabile, transluzente und blaustichig opake Polyurethan-Dispersion erhalten. Die Daten und Materialeigenschaften der Polyurethan-Dispersion aus Beispiel 1C sind in Tabelle 1 zusammengefasst.

**Tabelle 1:**

| Beispiel 1 mit Varianten 1A, 1B und 1C | | | |
|---|---|---|---|
| Beispiel 1 | Variante 1A (V) | Variante 1B (E) | Variante 1C (E) |
| Aussehen | semitransluzent | semitransluzent | semitransluzent, blaustichig opak |
| Festkörper-Gehalt | 38 Gew.-% | 38 Gew.-% | 41 Gew.-% |
| pH-Wert | 7,25 | 7,30 | 7,20 |
| NMP-Gehalt | 6,1 Gew.-% | 6,1 Gew.-% | 4,4 Gew.-% |
| Dehnung bei der Zugfestigkeit | 405 % | 446 % | 492 % |
| Zugfestigkeit | 11,6 MPa | 13.3 MPa | 14,7 MPa |
| Härte nach König (DIN 53 157) | 25 s | 29 s | 31 s |

### Beispiel 2

### Polyurethan-Dispersion auf Basis eines Polyester-Diols der Molekularmasse 2 000 Dalton

### Variante 2A (Vergleichsbeispiel)

In einem Vierhalskolben ausgerüstet mit KPG-Rührer, Rückflußkühler, Thermometer und Stickstoffdeckung wurden 100,00 g eines Polyester-Diols (Handelsname: Bester 42H der Fa. Poliolchimica). 15,00 g 1,4-Butandiol (Fa. Aldrich). 15,00 g Dimethylolpropionsäure (Handelsname: DMPA® der Fa. Mallinckrodt) und 50,00 g N-Methylpyrrolidon (Fa. Aldrich) vorgelegt, vermischt und mit 101,92 g Isophorondiisocyanat versetzt. Die Mischung wurde unter Stickstoffdeckung bei 80 bis 90 °C bis zum Abklingen der Exothermie und bis zum Erreichen des berechneten NCO-Gehalts (Theorie: 3,91 Gew.-%; NCO/OH = 1,40) gerührt. Der Verlauf der Reaktion wurde acidimetrisch verfolgt. 250,00 g des Prepolymers wurden dann unter intensivem Rühren in ein Gemisch aus 261,50 g Wasser, 10,03 g Triethylamin (100 Equivalent-%) (indirekte Neutralisation) und 0,72 g Entschäumer BYK 024 dispergiert. Zum Aufbau der Polyurethan-Dispersion wurde mit einem Gemisch aus 5,06 g Ethylendiamin (70 Equivalent-%) und 25,30 g Wasser kettenverlängert.

Es wurde eine stabile, transluzente Polyurethan-Dispersion erhalten. Die Daten und Materialeigenschaften der Polyurethan-Dispersion aus Beispiel 2A sind in Tabelle 2 zusammengefasst.

### Variante 2B (Erfindung)

In einem Vierhalskolben ausgerüstet mit KPG-Rührer, Rückflußkühler, Thermometer und Stickstoffdeckung wurde ein homogenes Polyol-Gemisch, bestehend aus 100,00 g eines Polyester-Diols (Handelsname: Bester 42H der Fa. Poliolchimica), 15,00 g 1,4-Butandiol (Fa. Aldrich), 15,00 g Dimethylolpropionsäure (Handelsname: DMPA® der Fa. Mallinckrodt) und 50,00 g N-Methylpyrrolidon (Fa. Aldrich) bei einer Temperatur von 70 bis 80 °C hergestellt. Anschließend wurden 101,92 g Isophorondiisocyanat mit 90 g des vorher hergestellten Polyol-Gemisches versetzt. Diese Mischung wurde unter Stickstoffdeckung bei 80 bis 90 °C bis zum Abklingen der schwachen Exothermie und bis zum Erreichen des berechneten NCO-Gehalts (NCO/OH = 2,80) dieser Reaktionsstufe, gerührt. Nach der Zugabe der zweiten Hälfte (90 g) des Polyol-Gemisches wurde unter Stickstoffdeckung bei 80 bis 90 °C gerührt, bis der berechnete NCO-Gehalt dieser Reaktionsstufe (NCO/OH = 1,80), bzw. der NCO-Gehalt der gesamten Reaktion (Theorie: 3,91 Gew.-%; NCO/OH = 1,40) erreicht wurde. Der Verlauf der Reaktion wurde acidimetrisch verfolgt. 250,00 g des Prepolymers wurden dann unter intensivem Rühren in ein Gemisch aus 261,50 g Wasser, 10,03 g Triethylamin (100 Equivalent-%) (indirekte Neutralisation) und 0,72 g Entschäumer BYK 024 dispergiert. Zum Aufbau der Polyurethan-Dispersion wurde mit einem Gemisch aus 5,06 g Ethylendiamin (70 Equivalent-%) und 25,30 g Wasser kettenverlängert.

Es wurde eine stabile, transluzente Polyurethan-Dispersion erhalten. Die Daten und Materialeigenschaften der Polyurethan-Dispersion aus Beispiel 2B sind in Tabelle 2 zusammengefasst.

### Variante 2C (Erfindung)

In einem Vierhalskolben ausgerüstet mit KPG-Rührer, Rückflußkühler, Thermometer und Stickstoffdeckung wurde ein homogenes Polyol-Gemisch, bestehend aus 100,00 g eines Polyester-Diols (Handelsname: B 42H der Fa. Poliolchimica), 15,00 g 1,4-Butandiol (Fa. Aldrich), 15,00 g Dimethylolpropionsäure (Handelsname: DMPA® der Fa. Mallinckrodt) und 40,00 g N-Methylpyrrolidon (Fa. Aldrich) bei einer Temperatur von 70 bis 80 °C hergestellt. Anschließend wurden 101,92 g Isophorondiisocyanat mit 68 g des vorher hergestellten Polyol-Gemisches versetzt. Diese Mischung wurde unter Stickstoffdeckung bei 80 bis 90 °C bis zum Abklingen der schwachen Exothermie und bis zum Erreichen des berechneten NCO-Gehalts (NCO/OH = 3,50) dieser Reaktionsstufe, gerührt. Nach der Zugabe der übrigen 102 g des Polyol-Gemisches wurde unter Stickstoffdeckung bei 80 bis 90 °C gerührt, bis der berechnete NCO-Gehalt dieser Reaktionsstufe (NCO/OH = 1,66) bzw. der NCO-Gehalt der gesamten Reaktion (Theorie: 3,91 Gew.-%; NCO/OH = 1,40) erreicht wurde. Der Verlauf der Reaktion wurde acidimetrisch verfolgt. 271,92 g des Prepolymers wurden dann - ohne Rührwirkung - mit einem Gemisch aus 275,98 g Wasser, 11,32 g Triethylamin (100 Equivalent-%) (indirekte Neutralisation) und 0,76 g Entschäumer BYK 024 überschichtet und anschließend unter intensivem Rühren im Dissolver binnen 1 Minute vollständig dispergiert. Zum Aufbau der Polyurethan-Dispersion wurde mit einem Gemisch aus 5,51 g Ethylendiamin (70 Equivalent-%) und 27,53 g Wasser kettenverlängert.

Es wurde eine stabile, transluzente und blaustichig opake Polyurethan-Dispersion erhalten. Die Daten und Materialeigenschaften der Polyurethan-Dispersion aus Beispiel 2C sind in Tabelle 2 zusammengefasst.

**Tabelle 2:**

| Beispiel 2 mit Varianten 2A, 2B und 2C | | | |
|---|---|---|---|
| Beispiel 2 | Variante 2A (V) | Variante 2B (E) | Variante 2C (E) |
| Aussehen | semitransluzent | semitransluzent | semitransluzent, blaustichig opak |
| Festkörper-Gehalt | 40 Gew.-% | 40 Gew.-% | 42 Gew.-% |
| pH-Wert | 7,30 | 7,35 | 7,20 |
| NMP-Gehalt | 8,0 Gew.-% | 8,0 Gew.-% | 6,75 Gew.-% |
| Dehnung bei der Zugfestigkeit | 335 % | 383 % | 405 % |
| Zugfestigkeit | 38,8 MPa | 42,2 MPa | 48,0 MPa |
| Härte nach König (DIN 53 157) | 107 s | 120 s | 130 s |

### Beispiel 3

### Polyurethan-Dispersion auf Basis eines Polycarbonat-Diols der Molekularmasse 2 000 Dalton

### Variante 3A (Vergleichsbeispiel)

In einem Vierhalskolben ausgerüstet mit KPG-Rührer, Rückflußkühler, Thermometer und Stickstoffdeckung wurden 100,00 g eines Polycarbonat-Diols (Handelsname: Desmophen C200 der Fa. Bayer), 9,00 g 1,4-Butandiol (Fa. Aldrich), 14,00 g Dimethylolpropionsäure (Handelsname: DMPA® der Fa. Mallinckrodt) und 35,00 g N-Methylpyrrolidon (Fa. Aldrich) vorgelegt, vermischt und mit 79,09 g Isophorondiisocyanat versetzt. Die Mischung wurde unter Stickstoffdeckung bei 80 bis 90 °C bis zum Abklingen der Exothermie und bis zum Erreichen des berechneten NCO-Gehalts (Theorie: 3,60 Gew.-%; NCO/OH = 1,40) gerührt. Der Verlauf der Reaktion wurde acidimetrisch verfolgt. 220,00 g des Prepolymers wurden dann unter intensivem Rühren in ein Gemisch aus 249,64 g Wasser, 9,80 g Triethylamin (100 mol %) (indirekte Neutralisation) und 0,67 g Entschäumer BYK 024 dispergiert. Zum Aufbau der Polyurethan-Dispersion wurde mit einem Gemisch aus 3,96 g Ethylendiamin (70 Equivalent-%) und 19,81 g Wasser kettenverlängert.

Es wurde eine stabile, transluzente Polyurethan-Dispersion erhalten. Die Daten und Materialeigenschaften der Polyurethan-Dispersion aus Beispiel 3A sind in Tabelle 3 zusammengefasst.

### Variante 3B (Erfindung)

In einem Vierhalskolben ausgerüstet mit KPG-Rührer, Rückflußkühler, Thermometer und Stickstoffdeckung wurde ein homogenes Polyol-Gemisch, bestehend aus 100,00 g eines Polycarbonat-Diols (Handelsname: Desmophen C200 der Fa. Bayer), 9,00 g 1,4-Butandiol (Fa. Aldrich), 14,00 g Dimethylolpropionsäure (Handelsname: DMPA® der Fa. Mallinckrodt) und 35,00 g N-Methylpyrrolidon (Fa. Aldrich) bei einer Temperatur von 70 bis 80 °C hergestellt. Anschließend wurden 79,09 g Isophorondiisocyanat mit 75 g des vorher hergestellten Polyol-Gemisches versetzt. Diese Mischung wurde unter Stickstoffdeckung bei 80 bis 90 °C bis zum Abklingen der schwachen Exothermie und bis zum Erreichen des berechneten NCO-Gehalts (NCO/OH = 2,95) dieser Reaktionsstufe, gerührt. Nach der Zugabe der übrigen 83 g des Polyol-Gemisches wurde unter Stickstoffdeckung bei 80 bis 90 °C gerührt, bis der berechnete NCO-Gehalt dieser Reaktionsstufe (NCO/OH = 1,76) bzw. der NCO-Gehalt der gesamten Reaktion (Theorie: 3,60 Gew.-%; NCO/OH = 1,40) erreicht wurde. Der Verlauf der Reaktion wurde acidimetrisch verfolgt.
220,00 g des Prepolymers wurden dann unter intensivem Rühren in ein Gemisch aus 249,64 g Wasser, 9,80 g Triethylamin (100 mol %) (indirekte Neutralisation) und 0,67 g Entschäumer BYK 024 dispergiert. Zum Aufbau der Polyurethan-Dispersion wurde mit einem Gemisch aus 3,96 g Ethylendiamin (70 Equivalent-%) und 19,81 g Wasser kettenverlängert.

Es wurde eine stabile, transluzente Polyurethan-Dispersion erhalten. Die Daten und Materialeigenschaften der Polyurethan-Dispersion aus Beispiel 3B sind in Tabelle 3 zusammengefasst.

### Variante 3C (Erfindung)

In einem Vierhalskolben ausgerüstet mit KPG-Rührer, Rückflußkühler, Thermometer und Stickstoffdeckung wurde ein homogenes Polyol-Gemisch, bestehend aus 100,00 g eines Polycarbonat-Diols (Handelsname: Desmophen C200 der Fa. Bayer), 9,00 g 1,4-Butandiol (Fa. Aldrich), 14,00 g Dimethylolpropionsäure (Handelsname: DMPA® der Fa. Mallinckrodt) und 20,00 g N-Methylpyrrolidon (Fa. Aldrich) bei einer Temperatur von 70 bis 80 °C hergestellt. Anschließend wurden 79,09 g Isophorondiisocyanat mit 66 g des vorher hergestellten Polyol-Gemisches versetzt. Diese Mischung wurde unter Stickstoffdeckung bei 80 bis 90 °C bis zum Abklingen der schwachen Exothermie und bis zum Erreichen des berechneten NCO-Gehalts (NCO/OH = 3,35) dieser Reaktionsstufe, gerührt. Nach der Zugabe der übrigen 92 g des Polyol-Gemisches wurde unter Stickstoffdeckung bei 80 bis 90 °C gerührt, bis der berechnete NCO-Gehalt dieser Reaktionsstufe (NCO/OH = 1,69) bzw. der NCO-Gehalt der gesamten Reaktion (Theorie: 3,85 Gew.-%, NCO/OH = 1,40) erreicht wurde. Der Verlauf der Reaktion wurde acidimetrisch verfolgt.
222,09 g des Prepolymers wurden dann - ohne Rührwirkung - mit einem Gemisch aus 223,55 g Wasser, 10,56 g Triethylamin (100 mol %) (indirekte Neutralisation) und 0,61 g Entschäumer BYK 024 überschichtet und anschließend unter intensivem Rühren im Dissolver binnen 1 Minute vollständig dispergiert. Zum Aufbau der Polyurethan-Dispersion wurde mit einem Gemisch aus 4,33 g Ethylendiamin (70 Equivalent-%) und 21,65 g Wasser kettenverlängert.

Es wurde eine stabile, transluzente und blaustichig opake Polyurethan-Dispersion erhalten. Die Daten und Materialeigenschaften der Polyurethan-Dispersion aus Beispiel 3C sind in Tabelle 3 zusammengefasst.

**Tabelle 3:**

| Beispiel 3 mit Varianten 3A, 3B und 3C | | | |
|---|---|---|---|
| Beispiel 3 | Variante 3A (V) | Variante 3B (E) | Variante 3C (E) |
| Aussehen | semitransluzent | semitransluzent | semitransluzent, blaustichig opak |
| Festkörper-Gehalt | 40 Gew.-% | 40 Gew.-% | 42 Gew.-% |
| pH-Wert | 7,34 | 7,28 | 7,30 |
| NMP-Gehalt | 6,45 Gew.-% | 6,45 Gew.-% | 4,14 Gew.-% |
| Dehnung bei der Zugfestigkeit | 305 % | 297 % | 369 % |
| Zugfestigkeit | 41,8 MPa | 43,4 MPa | 50,5 MPa |
| Härte nach König (DIN 53 157) | 101 s | 96 s | 115 s |

### Beispiel 4

### Polyurethan-Dispersion auf Basis eines Polyester-Diols der Molekularmasse 2 000 Dalton und eines α,ω-Poly(n-butylmethacrylat)-Diols der Molekularmasse 1 000 Dalton

### Variante 4A (Vergleichsbeispiel)

In einem Vierhalskolben ausgerüstet mit KPG-Rührer, Rückflußkühler, Thermometer und Stickstoffdeckung wurden 50,00 g eines Polyester-Diols (Handelsname: Bester 42H der Fa. Poliolchimica), 50,00 g eines α,ω-Poly(nbutylmethacrylat)-Diols (Handelsname: TEGO® Diol BD-1000 der Fa. Tego Chemie Service GmbH), 15,00 g Dimethylolpropionsäure (Handelsname: DMPA® der Fa. Mallinckrodt) und 45,00 g N-Methylpyrrolidon (Fa. Aldrich) vorgelegt, vermischt und mit 110,05 g Isophorondiisocyanat versetzt. Die Mischung wurde unter Stickstoffdeckung bei 80 bis 90 °C bis zum Abklingen der Exothermie und bis zum Erreichen des berechneten NCO-Gehalts (Theorie: 4,10 Gew.-%; NCO/OH = 1,40) gerührt. Der Verlauf der Reaktion wurde acidimetrisch verfolgt.

260,00 g des Prepolymers wurden dann unter intensivem Rühren in ein Gemisch aus 310,49 g Wasser, 10,32 g Triethylamin (100 mol %) (indirekte Neutralisation) und 1,43 g Entschäumer BYK 024 dispergiert. Zum Aufbau der Polyurethan-Dispersion wurde mit einem Gemisch aus 5,32 g Ethylendiamin (70 Equivalent-%) und 47,92 g Wasser kettenverlängert.

Es wurde eine stabile, transluzente Polyurethan-Dispersion erhalten. Die Daten und Materialeigenschaften der Polyurethan-Dispersion aus Beispiel 4A sind in Tabelle 4 zusammengefasst.

### Variante 4B (Erfindung)

In einem Vierhalskolben ausgerüstet mit KPG-Rührer, Rückflußkühler, Thermometer und Stickstoffdeckung wurde ein homogenes Polyol-Gemisch, bestehend aus 50,00 g eines Polyester-Diols (Handelsname: Bester 42H der Fa. Poliolchimica), 50,00 g eines α,ω-Poly(n-butylmethacrylat)-Diols (Handelsname: TEGO® Diol BD-1000 der Fa. Tego Chemie Service GmbH), 15,00 g 1,4-Butandiol (Fa. Aldrich), 15,00 g Dimethylolpropionsäure (Handelsname: DMPA® der Fa. Mallinckrodt) und 45,00 g N-Methylpyrrolidon (Fa. Aldrich) bei einer Temperatur von 70 bis 80 °C hergestellt. Anschließend wurden 110,05 g Isophorondiisocyanat mit 95 g des vorher hergestellten Polyol-Gemisches versetzt. Diese Mischung wurde unter Stickstoffdeckung bei 80 bis 90 °C bis zum Abklingen der schwachen Exothermie und bis zum Erreichen des berechneten NCO-Gehalts (NCO/OH = 2,78) dieser Reaktionsstufe, gerührt. Nach der Zugabe der übrigen 80 g des Polyol-Gemisches wurde unter Stickstoffdeckung bei 80 bis 90 °C gerührt, bis der berechnete NCO-Gehalt dieser Reaktionsstufe (NCO/OH = 2,11) bzw. der NCO-Gehalt der gesamten Reaktion (Theorie: 4,17 Gew.-%; NCO/OH = 1,40) erreicht wurde. Der Verlauf der Reaktion wurde acidimetrisch verfolgt.

260,00 g des Prepolymers wurden dann unter intensivem Rühren in ein Gemisch aus 310,49 g Wasser, 10,32 g Triethylamin (100 mol %) (indirekte Neutralisation) und 1,43 g Entschäumer BYK 024 dispergiert. Zum Aufbau der Polyurethan-Dispersion wurde mit einem Gemisch aus 5,32 g Ethylendiamin (70 Equivalent-%) und 47,92 g Wasser kettenverlängert.

Es wurde eine stabile, transluzente Polyurethan-Dispersion erhalten. Die Daten und Materialeigenschaften der Polyurethan-Dispersion aus Beispiel 4B sind in Tabelle 4 zusammengefasst.

### Variante 4C (Erfindung)

In einem Vierhalskolben ausgerüstet mit KPG-Rührer, Rückflußkühler, Thermometer und Stickstoffdeckung wurde ein homogenes Polyol-Gemisch, bestehend aus 50,00 g eines Polyester-Diols (Handelsname: Bester 42H der Fa. Poliolchimica), 50,00 g eines α,ω-Poly(n-butylmethacrylat)-Diols (Handelsname: TEGO® Diol BD-1000 der Fa. Tego Chemie Service GmbH), 15,00 g 1,4-Butandiol (Fa. Aldrich), 15,00 g Dimethylolpropionsäure (Handelsname: DMPA® der Fa. Mallinckrodt) und 35,00 g N-Methylpyrrolidon (Fa. Aldrich) bei einer Temperatur von 70 bis 80 °C hergestellt. Anschließend wurden 110,05 g Isophorondiisocyanat mit 77 g des vorher hergestellten Polyol-Gemisches versetzt.
Diese Mischung wurde unter Stickstoffdeckung bei 80 bis 90 °C bis zum Abklingen der schwachen Exothermie und bis zum Erreichen des berechneten NCO-Gehalts (NCO/OH = 3,23) dieser Reaktionsstufe, gerührt. Nach der Zugabe der übrigen 88 g des Polyol-Gemisches wurde unter Stickstoffdeckung bei 80 bis 90 °C gerührt, bis der berechnete NCO-Gehalt dieser Reaktionsstufe (NCO/OH = 1,95) bzw. der NCO-Gehalt der gesamten Reaktion (Theorie: 4,32 Gew.-%, NCO/OH = 1,40) erreicht wurde. Der Verlauf der Reaktion wurde acidimetrisch verfolgt.
275,05 g des Prepolymers wurden dann - ohne Rührwirkung - mit einem Gemisch aus 266,77 g Wasser, 11,32 g Triethylamin (100 mol %) (indirekte Neutralisation) und 1,28 g Entschäumer BYK 024 überschichtet und anschließend unter intensivem Rühren im Dissolver binnen 1 Minute vollständig dispergiert.
Zum Aufbau der Polyurethan-Dispersion wurde mit einem Gemisch aus 5,95 g Ethylendiamin (70 Equivalent-%) und 53,57 g Wasser kettenverlängert.

Es wurde eine stabile, transluzente und blaustichig opake Polyurethan-Dispersion erhalten. Die Daten und Materialeigenschaften der Polyurethan-Dispersion aus Beispiel 4C sind in Tabelle 4 zusammengefasst.

**Tabelle 4:**

| Beispiel 4 mit Varianten 4A, 4B und 4C | | | |
|---|---|---|---|
| Beispiel 4 | Variante 4A (V) | Variante 4B (E) | Variante 4C (E) |
| Aussehen | semitransluzent | semitransluzent | semitransluzent, blaustichig opak |
| Festkörper-Gehalt | 37 Gew.-% | 37 Gew.-% | 42 Gew.-% |
| pH-Wert | 7,25 | 7,32 | 7,22 |
| NMP-Gehalt | 6,46 Gew.-% | 6,46 Gew.-% | 5,70 Gew.-% |
| Dehnung bei der Zugfestigkeit | 20 % | 38% | 156 % |
| Zugfestigkeit | 3,8 MPa | 10,4 MPa | 49,9 MPa |
| Härte nach König (DIN 53 157) | 143 s | 143 s | 163 s |

### Beispiel 5

### Polyurethan-Dispersion auf Basis eines Polypropylenglykols der Molekularmasse 2 000 Dalton und eines α,ω-Poly(n-butylmethacrylat)-Diols der Molekularmasse 1 000 Dalton

### Variante 5A (Vergleichsbeispiel)

In einem Vierhalskolben ausgerüstet mit KPG-Rührer, Rückflußkühler, Thermometer und Stickstoffdeckung wurden 50,00 g eines Polypropylenglykols (Handelsname: Voranol P 2000 der Fa. Dow Chemical), 50,00 g eines α,ω-Poly(n-butylmethacrylat)-Diols (Handelsname: TEGO® Diol BD-1000 der Fa. Tego Chemie Service GmbH), 15,00 g 1,4-Butandiol (Fa. Aldrich), 15,00 g Dimethylolpropionsäure (Handelsname: DMPA® der Fa. Mallinckrodt) und 45,00 g N-Methylpyrrolidon (Fa. Aldrich) vorgelegt, vermischt und mit 110,15 g Isophorondiisocyanat versetzt. Die Mischung wurde unter Stickstoffdeckung bei 80 bis 90 °C bis zum Abklingen der Exothermie und bis zum Erreichen des berechneten NCO-Gehalts (Theorie: 4,17 Gew.-%; NCO/OH = 1,40) gerührt. Der Verlauf der Reaktion wurde acidimetrisch verfolgt.
260,00 g des Prepolymers wurden dann unter intensivem Rühren in ein Gemisch aus 309,81 g Wasser, 10,32 g Triethylamin (100 mol %) (indirekte Neutralisation) und 1,43 g Entschäumer BYK 024 dispergiert. Zum Aufbau der Polyurethan-Dispersion wurde mit einem Gemisch aus 5,42 g Ethylendiamin (70 Equivalent-%) und 48,8 g Wasser kettenverlängert.

Es wurde eine stabile, transluzente Polyurethan-Dispersion erhalten. Die Daten und Materialeigenschaften der Polyurethan-Dispersion aus Beispiel 5A sind in Tabelle 5 zusammengefasst.

### Variante 5B (Erfindung)

In einem Vierhalskolben ausgerüstet mit KPG-Rührer, Rückflußkühler, Thermometer und Stickstoffdeckung wurde ein homogenes Polyol-Gemisch, bestehend aus 50,00 g eines Polypropylenglykols (Handelsname: Voranol P 2000 der Fa. Dow Chemical), 50,00 g eines α,ω-Poly(n-butylmethacrylat)-Diols (Handelsname: TEGO® Diol BD-1000 der Fa. Tego Chemie Service GmbH), 15,00 g 1,4-Butandiol (Fa. Aldrich), 15,00 g Dimethylolpropionsäure (Handelsname: DMPA® der Fa. Mallinckrodt) und 45,00 g N-Methylpyrrolidon (Fa. Aldrich) bei einer Temperatur von 70 bis 80 °C hergestellt. Anschließend wurden 110,15 g Isophorondiisocyanat mit 84 g des vorher hergestellten Polyol-Gemisches versetzt. Diese Mischung wurde unter Stickstoffdeckung bei 80 bis 90 °C bis zum Abklingen der schwachen Exothermie und bis zum Erreichen des berechneten NCO-Gehalts (NCO/OH = 3,15) dieser Reaktionsstufe, gerührt. Nach der Zugabe der übrigen 80 g des Polyol-Gemisches wurde unter Stickstoffdeckung bei 80 bis 90 °C gerührt, bis der berechnete NCO-Gehalt dieser Reaktionsstufe (NCO/OH = 1,98) bzw. der NCO-Gehalt der gesamten Reaktion (Theorie: 4,17 Gew.-%; NCO/OH = 1,40) erreicht wurde. Der Verlauf der Reaktion wurde acidimetrisch verfolgt.
260,00 g des Prepolymers wurden dann unter intensivem Rühren in ein Gemisch aus 309,81 g Wasser, 10,32 g Triethylamin (100 mol %) (indirekte Neutralisation) und 1,43 g Entschäumer BYK 024 dispergiert. Zum Aufbau der Polyurethan-Dispersion wurde mit einem Gemisch aus 5,42 g Ethylendiamin (70 Equivalent-%) und 48,8 g Wasser kettenverlängert.

Es wurde eine stabile, transluzente Polyurethan-Dispersion erhalten. Die Daten und Materialeigenschaften der Polyurethan-Dispersion aus Beispiel 5B sind in Tabelle 5 zusammengefasst.

### Variante 5C (Erfindung)

In einem Vierhalskolben ausgerüstet mit KPG-Rührer, Rückflußkühler, Thermometer und Stickstoffdeckung wurde ein homogenes Polyol-Gemisch, bestehend aus 50,00 g eines Polypropylenglykols (Handelsname: Voranol P 2000 der Fa. Dow Chemical), 50,00 g eines α,ω-Poly(n-butylmethacrylat)-Diols (Handelsname: TEGO® Diol BD-1000 der Fa. Tego Chemie Service GmbH), 15,00 g 1,4-Butandiol (Fa. Aldrich), 15,00 g Dimethylolpropionsäure (Handelsname: DMPA® der Fa. Mallinckrodt) und 30,00 g N-Methylpyrrolidon (Fa. Aldrich) bei einer Temperatur von 70 bis 80 °C hergestellt. Anschließend wurden 110,15 g Isophorondiisocyanat mit 71 g des vorher hergestellten Polyol-Gemisches versetzt. Diese Mischung wurde unter Stickstoffdeckung bei 80 bis 90 °C bis zum Abklingen der schwachen Exothermie und bis zum Erreichen des berechneten NCO-Gehalts (NCO/OH = 3,40) dieser Reaktionsstufe, gerührt. Nach der Zugabe der übrigen 89 g des Polyol-Gemisches wurde unter Stickstoffdeckung bei 80 bis 90 °C gerührt, bis der berechnete NCO-Gehalt dieser Reaktionsstufe (NCO/OH = 1,92) bzw. der NCO-Gehalt der gesamten Reaktion (Theorie: 4,41 Gew.-%, NCO/OH = 1,40) erreicht wurde. Der Verlauf der Reaktion wurde acidimetrisch verfolgt.
270,15 g des Prepolymers wurden dann - ohne Rührwirkung - mit einem Gemisch aus 272,01 g Wasser, 11,32 g Triethylamin (100 mol %) (indirekte Neutralisation) und 1,30 g Entschäumer BYK 024 überschichtet und anschließend unter intensivem Rühren im Dissolver binnen 1 Minute vollständig dispergiert. Zum Aufbau der Polyurethan-Dispersion wurde mit einem Gemisch aus 5,94 g Ethylendiamin (70 Equivalent-%) und 53,45 g Wasser kettenverlängert.

Es wurde eine stabile, transluzente und blaustichig opake Polyurethan-Dispersion erhalten. Die Daten und Materialeigenschaften der Polyurethan-Dispersion aus Beispiel 5C sind in Tabelle 5 zusammengefasst.

**Tabelle 5:**

| Beispiel 5 mit Varianten 5A, 5B und 5C | | | |
|---|---|---|---|
| Beispiel 5 | Variante 5A (V) | Variante 5B (E) | Variante 5C (E) |
| Aussehen | semitransluzent | semitransluzent | semitransluzent, blaustichig opak |
| Festkörper-Gehalt | 37 Gew.-% | 37 Gew.-% | 42 Gew.-% |
| pH-Wert | 7,36 | 7,39 | 7,42 |
| NMP-Gehalt | 6,45 Gew.-% | 6,45 Gew.-% | 4,88 Gew.-% |
| Dehnung bei der Zugfestigkeit | 19 % | 78 % | 176 % |
| Zugfestigkeit | 6,2 MPa | 15,9 MPa | 29,3 MPa |
| Härte nach König (DIN 53 157) | 133 s | 133 s | 152 s |

### Beispiel 6

### Lösemittelfreie Polyurethan-Dispersion auf Basis eines Polypropylenglykols der Molekularmasse 2 000 Dalton (Erfindung)

In einem Vierhalskolben ausgerüstet mit KPG-Rührer, Rückflußkühler, Thermometer und Stickstoff-Deckung wurde ein Gemisch aus 100,00 g eines Polypropylenglykols mit einer Hydroxyl-Zahl von 56,1 mg KOH·g⁻¹ (Handelsname Acclaim® 2200 der Fa. Arco Chemical, low monol type) und 35,49 g Isophorondiisocyanat (Handelsname Vestanat IPDI der Fa. Hüls) unter Stickstoff-Deckung 2 h bei 80 - 90 °C in Gegenwart von 0.1 g Dibutylzinndilaureat (DBTL) als Katalysator gerührt. Nach Zugabe von 4,00 g fein gemahlener Dimethylolpropionsäure (Handelsname DMPA® der Fa. Mallinckrodt) zu dem Preaddukt wurde die Mischung unter Stickstoff-Deckung bei 80 - 90 °C weiter gerührt, bis der berechnete NCO-Gehalt erreicht war (Theorie: 4,81 Gew.-%, NCO/OH = 2,00). Der Verlauf der Reaktion wurde acidimetrisch verfolgt.

Nach dem Abkühlen auf 60°C wurde das Prepolymer mit 2,72 g (90 Equivalent-%) an Triethylamin direkt neutralisiert.
142,21 g des Prepolymers wurden dann - ohne Rührwirkung - mit 146,04 g Wasser überschichtet und anschließend unter intensiven Rühren im Dissolver binnen 1 Minute vollständig dispergiert. Zum Aufbau der Polyurethan-Dispersion wurde mit 3,83 g (80 Equivalent-%) an Ethylendiamin kettenverlängert.

Es wurde eine stabile, milchig-weiße Polyurethan-Dispersion erhalten. Die Daten und Materialeigenschaften der Polyurethan-Dispersion aus Beispiel 6 sind in Tabelle 6 zusammengefasst.

### Beispiel 7

### Polyurethan-Dispersion auf Basis eines Polycarbonat-Diols der Molekularmasse 2 000 Dalton (Erfindung)

In einem Vierhalskolben ausgerüstet mit KPG-Rührer, Rückflußkühler, Thermometer und Stickstoff-Deckung wurde ein Gemisch aus 100,00 g eines Polycarbonat-Dioles mit einer Hydroxyl-Zahl von 56,1 mg KOH·g⁻¹ (Handelsname Desmophen® C200 der Fa. Bayer), 15,16 g N-Methylpyrrolidon und 40.89 g Isophorondiisocyanat (Handelsname Vestanat IPDI der Fa. Hüls) unter Stickstoff-Deckung 2 h bei 80 - 90 °C in Gegenwart von 0.1 g Dibutylzinndilaureat (DBTL) als Katalysator gerührt. Nach Zugabe von 5,63 g fein gemahlener Dimethylolpropionsäure (Handelsname DMPA® der Fa. Mallinckrodt) zu dem Preaddukt wurde die Mischung unter Stickstoff-Deckung bei 80 - 90 °C weiter gerührt, bis der berechnete NCO-Gehalt erreicht war (Theorie: 4,78 Gew.-%, NCO/OH = 2,00). Der Verlauf der Reaktion wurde acidimetrisch verfolgt.
165,50 g des Prepolymers wurden dann - ohne Rührwirkung - mit einem Gemisch aus 169,92 g Wasser und 3,82 g (90 Equivalent-%) an Triethylamin (direkte Neutralisation) überschichtet und anschließend unter intensiven Rühren im Dissolver binnen 1 Minute vollständig dispergiert. Zum Aufbau der Polyurethan-Dispersion wurde mit 4,42 g (80 Equivalent-%) an Ethylendiamin kettenverlängert.

Es wurde eine stabile, milchig-weiße Polyurethan-Dispersion erhalten. Die Daten und Materialeigenschaften der Polyurethan-Dispersion aus Beispiel 7 sind in Tabelle 6 zusammengefasst.

**Tabelle 6:**

| Beispiele 6 und 7 | | | | |
|---|---|---|---|---|
| Beispiele | 6 | 6 Vergleich* | 7 | 7 Vergleich* |
| Aussehen | milchig-weiß | milchig-weiß | milchig-weiß | milchig-weiß |
| Festkörper-Gehalt | 50 Gew.-% | 50 Gew.-% | 50 Gew.-% | 50 Gew.-% |
| pH-Wert | 7,73 | 7,55 | 7,62 | 7,60 |
| NMP-Wert | - | - | 4,46 Gew.-% | 4,46 Gew.-% |
| Dehnung bei der Zugfestigkeit | 808 % | 705 % | 356 % | 300 % |
| Zufestigkeit | 24,5 MPa | 23,6 MPa | 39,8 MPa | 28,5 MPa |
| Härte nach König (DIN 53 157) | 28 s | 25 s | 50 s | 43 s |

| | | | | |
|---|---|---|---|---|
| * Vergleichsbeispiel: konventionelle Dispergierung | | | | |

Die Beispiele 1 bis 7 zeigen, dass beim Übergang vom konventionellen Verfahren zum erfindungsgemäßen Verfahren bei Verwendung identischer Rezepturen selbstemulgierbare, wässrige Polyurethan-Harze mit erhöhten Festkörpergehalten, geringeren Lösemittel-Gehalten und verbesserten mechanischen Eigenschaften erhalten werden.

## Patentansprüche

1. Verfahren zur Herstellung von selbstemulgierbaren, wässrigen Polyurethan-Harzen, **dadurch gekennzeichnet, dass** man
a) zunächst eine Vormischung aus einer Polyol-Komponente (A), bestehend aus 5 bis 25 Gew.-Teilen von mindestens einem Diol (A) (i) mit einer Molekularmasse von 500 bis 5000 Dalton, 0,5 bis 5 Gew.-Teilen von mindestens einem Polyhydroxyalkan (A) (ii) sowie 0 bis 5 Gew.-Teilen von mindestens einer anionisch modifizierbaren Dihydroxyalkancarbonsäure (A) (iii) und 0 bis 9 Gew.-Teilen einer Lösemittel-Komponente (B) herstellt,
b) 5 bis 50 Gew.-Teile einer Polyisocyanat-Komponente (C) mit 11 bis 39 Gew.-Teilen der Vormischung aus Stufe a) zu einem Polyurethan-Preaddukt umsetzt, wobei das NCO/OH-Equivalentverhältnis in dieser Stufe 1,75 bis 8,0 beträgt,
c) das Polyurethan-Preaddukt aus Stufe b) entweder mit 5 bis 33 Gew.-Teilen der Vormischung aus Stufe a) oder 0,5 bis 5 Gew.-Teilen einer anionisch modifizierbaren Dihydroxyalkancarbonsäure (A) (iii) zu einem Polyurethan-Prepolymer umsetzt, wobei das NCO/OH-Equivalentverhältnis in dieser Stufe 1,5 bis 8,0, insbesondere 1,5 bis 5,0 beträgt,
d) das Polyurethan-Prepolymer aus Stufe c) dann mit einem vorgefertigten Gemisch aus 5 bis 225 Gew.-Teilen Wasser, 0,5 bis 4 Gew.-Teilen einer Neutralisations-Komponente (D) und 0 bis 1 Gew.-Teilen einer Entschäumer-Komponente (E) vermischt und anschließend oder gleichzeitig
e) das wässrige Polyurethan-Prepolymer aus Stufe d) mit 0,025 bis 4 Gew.-Teilen einer Kettenverlängerungs-Komponente (F), die mit zuvor entnommenen Anteilen des Wassers aus Stufe d) im Verhältnis 1 : 10 bis 10 : 1 verdünnt wird, umsetzt.

2. Verfahren nach Anspruch 1, **dadurch gekennzeichnet, dass** es sich bei der Diol-Komponente (A) (i) um lineare polymere Diole mit zwei gegenüber Polyisocyanaten reaktiven Hydroxyl-Gruppen und einer Molekularmasse von 1 000 bis 4 000 Dalton handelt.

3. Verfahren nach Anspruch 2, **dadurch gekennzeichnet, dass** als lineare polymere Diole Polyalkylenglykole, Polyesterpolyole, α, ω-Dihydroxypolyolefine oder Gemische daraus eingesetzt werden.

4. Verfahren nach einem der Ansprüche 1 bis 3, **dadurch gekennzeichnet, dass** es sich bei der Polyhydroxyalkan-Komponente (A) (ii) um niedermolekulare Polyole mit zwei oder mehreren gegenüber Polyisocyanaten reaktiven Hydroxylgruppen mit einer Molekularmasse von 50 bis 500 Dalton handelt.

5. Verfahren nach einem der Ansprüche 1 bis 4, **dadurch gekennzeichnet, dass** es sich bei der Dihydroxyalkancarbonsäure (A) (iii) um niedermolekulare Verbindungen mit zwei gegenüber Polyisocyanaten reaktiven Hydroxyl-Gruppen und einer oder mehreren gegenüber Polyisocyanaten inerten Carboxyl-Gruppe mit einer Molekularmasse von 100 bis 200 Dalton handelt.

6. Verfahren nach Anspruch 5, **dadurch gekennzeichnet, dass** als Dihydroxyalkancarbonsäure Dimethylolpropionsäure eingesetzt wird.

7. Verfahren nach einem der Ansprüche 1 bis 6, **dadurch gekennzeichnet, dass** es sich bei der Lösemittel-Komponente (B) um hydrophile organische Lösemittel mit einem Siedepunkt über 180 °C (bei Normaldruck) handelt.

8. Verfahren nach Anspruch 7, **dadurch gekennzeichnet, dass** als hochsiedendes und hydrophiles organisches Lösemittel N-Methylpyrrolidon eingesetzt wird.

9. Verfahren nach einem der Ansprüche 1 bis 8, **dadurch gekennzeichnet, dass** es sich bei der Polyisocyanat-Komponente (C) um mindestens ein Polyisocyanat, Polyisocyanat-Derivat oder Polyisocyanat-Homologes mit zwei oder mehreren aliphatischen oder aromatischen Isocyanat-Gruppen handelt.

10. Verfahren nach Anspruch 9, **dadurch gekennzeichnet, dass** als aliphatisches Polyisocyanat Isophorondiisocyanat eingesetzt wird.

11. Verfahren nach einem der Ansprüche 1 bis 10, **dadurch gekennzeichnet, dass** es sich bei der Neutralisations-Komponente (D) um Ammoniak, tertiäre Amine oder Alkalihydroxide handelt.

12. Verfahren nach Anspruch 11, **dadurch gekennzeichnet, dass** als tertiäres Amin Triethylamin eingesetzt wird.

13. Verfahren nach einem der Ansprüche 1 bis 12, **dadurch gekennzeichnet, dass** es sich bei der Kettenverlängerungs-Komponente (F) um mindestens ein Polyamin mit zwei oder mehreren gegenüber Polyisocyanaten reaktiven primären und/oder sekundären aliphatischen Amino-Gruppen handelt.

14. Verfahren nach Anspruch 13, **dadurch gekennzeichnet, dass** als aliphatisches Polyamin Ethylendiamin eingesetzt wird.

15. Verfahren zur Herstellung des Polyurethan-Harzes nach einem der Ansprüche 1 bis 14, **dadurch gekennzeichnet, dass** die Stufe a) bei einer Temperatur von 20 bis 120 °C, insbesondere bei 60 bis 80 °C, durchgeführt wird.

16. Verfahren nach einem der Ansprüche 1 bis 15, **dadurch gekennzeichnet, dass** das NCO/OH-Equivalentverhältnis der Komponenten (C) und (A) in Stufe b) auf einen Wert von 2,5 bis 4,0 eingestellt wird.

17. Verfahren nach einem der Ansprüche 1 bis 16, **dadurch gekennzeichnet, dass** die Stufe b) bei einer Temperatur von 60 bis 120 °C, insbesondere bei 80 bis 100 °C, durchgeführt wird.

18. Verfahren nach einem der Ansprüche 1 bis 17, **dadurch gekennzeichnet, dass** das NCO/OH-Equivalentverhältnis des Polyurethan-Preadduktes aus Stufe b) und der Komponente (A) in Stufe c) auf einen Wert von 1,6 bis 3,0 eingestellt wird.

19. Verfahren nach einem der Ansprüche 1 bis 18, **dadurch gekennzeichnet, dass** die Stufe c) bei einer Temperatur von 60 bis 120 °C, insbesondere bei 80 bis 100 °C, durchgeführt wird.

20. Verfahren nach einem der Ansprüche 1 bis 19, **dadurch gekennzeichnet, dass** das NCO/OH-Equivalentverhältnis der Gesamtmenge der Komponenten (A) und (C) auf einen Wert von 1,2 bis 2,2, insbesondere 1,4 bis 2,0, eingestellt wird.

21. Verfahren nach einem der Ansprüche 1 bis 20, **dadurch gekennzeichnet, dass** die Stufen b) und c) ggf. in Gegenwart von 0,01 bis 1 Gew.-Teilen bezogen auf die Gesamtmenge der Komponenten (A), (B) und (C) eines für Polyadditionsreaktionen an Polyisocyanaten üblichen Katalysators durchgeführt wird.

22. Verfahren nach einem der Ansprüche 1 bis 21, **dadurch gekennzeichnet, dass** in Stufe a) eine Vormischung der Komponenten (A) (i), (A) (ii), (A) (iii) und ggf. (B) hergestellt wird und die Vormischung aus Stufe a) dann in den Stufen b) und c) eingesetzt wird.

23. Verfahren nach einem der Ansprüche 1 bis 21, **dadurch gekennzeichnet, dass** in Stufe a) eine Vormischung der Komponenten (A) (i), (A) (ii) und ggf. (B) hergestellt wird, die Vormischung aus Stufe a) dann in Stufe b) vollständig eingesetzt wird und die Komponente (A) (iii) erst in Stufe c) umgesetzt wird.

24. Verfahren nach einem der Ansprüche 1 bis 23, **dadurch gekennzeichnet, dass** die Neutralisations-Komponente (D) in einer solchen Menge zugegeben wird, dass der Neutralisationsgrad bezogen auf die freien Carboxyl-Gruppen des Polyurethan-Prepolymers bei 70 bis 100 Equivalent-%, insbesondere bei 80 bis 100 Equivalent-%, bevorzugt bei 90 bis 100 Equivalent-% liegt.

25. Verfahren nach einem der Ansprüche 1 bis 24, **dadurch gekennzeichnet, dass** in Stufe d) das Polyurethan-Prepolymer aus Stufe c) mit dem vorgefertigten Gemisch aus Wasser, der Neutralisations-Komponente (D) und der Entschäumer-Komponente (E) überschichtet und anschließend vermischt wird.

26. Verfahren nach einem der Ansprüche 1 bis 24, **dadurch gekennzeichnet, dass** in Stufe d) das Polyurethan-Prepolymer aus Stufe c) in das vorgefertigte Gemisch aus Wasser, der Neutralisations-Komponente (D) und der Entschäumer-Komponente (E) eingerührt wird.

27. Verfahren nach einem der Ansprüche 1 bis 26, **dadurch gekennzeichnet, dass** die Neutralisations-Komponente (D) bereits nach Stufe c) in das Polyurethan-Prepolymer eingerührt wird.

28. Verfahren nach einem der Ansprüche 1 bis 27, **dadurch gekennzeichnet, dass** die Stufe d) bei einer Temperatur von 20 bis 80 °C, insbesondere bei 40 bis 60 °C, durchgeführt wird.

29. Verfahren nach einem der Ansprüche 1 bis 28, **dadurch gekennzeichnet, dass** in Stufe e) die Kettenverlängerungs-Komponente (F) in einer solchen Menge eingesetzt wird, dass der Kettenverlängerungsgrad bezogen auf die freien Isocyanat-Gruppen des Polyurethan-Harzes bei 10 bis 100 Equivalent-%, insbesondere bei 50 bis 100 Equivalent-%, liegt.

30. Verfahren nach einem der Ansprüche 1 bis 29, **dadurch gekennzeichnet, dass** die Kettenverlängerungs-Komponente (F) ggf. bereits in Stufe d) als vorgefertigtes Gemisch mit Wasser, der Neutralisierungs-Komponente (D) und der Entschäumer-Komponente (E) verwendet wird.

31. Verfahren nach einem der Ansprüche 1 bis 30, **dadurch gekennzeichnet, dass** die Stufe e) bei einer Temperatur von 20 bis 80 °C, insbesondere bei 30 bis 50 °C, durchgeführt wird.

32. Verfahren nach einem der Ansprüche 1 bis 31, **dadurch gekennzeichnet, dass** die Verarbeitungszeit zwischen dem Abschluss der Stufe c) und dem Abschluss der Stufe e) weniger als 1 Stunde, vorzugsweise weniger als 30 Minuten, beträgt.

33. Selbsemulgierbare, wässrige Polyurethanharze, **dadurch gekennzeichnet, dass** sie durch ein Verfahren nach einem der Ansprüche 1 bis 32 erhältlich sind.

34. Verwendung der nach einem der Ansprüche 1 bis 32 hergestellten selbstemulgierbaren, wässrigen Polyurethan-Harze im Baubereich als Bindemittel für ein- oder zweikomponentigen Beschichtungen, Dichtstoffe, Klebstoffe, Lacke, Membranen, Sportbodenbeläge und Versiegelungen für die Oberflächen von mineralischen Baustoffen, wie z.B. Beton, Gips, Zement, sowie Glas, Holz und Holzwerkstoffe, Papier, Metall oder Kunststoff.

## Claims

1. Method for producing self-emulsifiable, aqueous polyurethane resins, **characterized in that**
a) first a premix of polyol component (A), consisting of 5 to 25 parts by weight of at least one diol (A) (i) having a molar mass of 500 to 5 000 Dalton, 0.5 to 5 parts by weight of at least one polyhydroxyalkane (A) (ii) and 0 to 5 parts by weight of at least one anionically modifiable dihydroxyalkanecarboxylic acid (A) (iii), and 0 to 9 parts by weight of a solvent component (B) is prepared,
b) 5 to 50 parts by weight of a polyisocyanate component (C) is reacted with 11 to 39 parts by weight of the premix from stage a) to give a polyurethane preadduct, the NCO/OH equivalent ratio in this stage being 1.75 to 8.0,
c) the polyurethane preadduct from stage b) is reacted with either 5 to 33 parts by weight of the premix from stage a) or 0.5 to 5 parts by weight of an anionically modifiable dihydroxyalkanecarboxylic acid (A) (iii) to give a polyurethane prepolymer, the NCO/OH equivalent ratio in this stage being 1.5 to 8.0, in particular 1.5 to 5.0,
d) the polyurethane prepolymer from stage c) is then mixed with a prepared mixture of 5 to 225 parts by weight of water, 0.5 to 4 parts by weight of a neutralizing component (D) and 0 to 1 part by weight of an antifoam component (E) and thereafter or simultaneously
e) the aqueous polyurethane prepolymer from stage d) is reacted with 0.025 to 4 parts by weight of a chain-extending component (F) which is diluted with proportions of water from stage d) taken beforehand in the ratio of 1 : 10 to 10 : 1.

2. Method according to Claim 1, **characterized in that** the diol component (A) (i) comprises linear polymeric diols having two hydroxyl groups reactive towards polyisocyanates and a molar mass of 1 000 to 4 000 Dalton.

3. Method according to Claim 2, **characterized in that** the linear polymeric diols used are polyalkylene glycols, polyesterpolyols, α,ω-dihydroxypolyolefins or mixtures thereof.

4. Method according to any of Claims 1 to 3, **characterized in that** the polyhydroxyalkane component (A) (ii) comprises low molecular weight polyols having two or more hydroxyl groups reactive towards polyisocyanates and a molar mass of 50 to 500 Dalton.

5. Method according to any of Claims 1 to 4, **characterized in that** the dihydroxyalkanecarboxylic acid (A) (iii) comprises low molecular weight compounds having two hydroxyl groups reactive towards polyisocyanates and one or more carboxyl group inert towards polyisocyanates and a molar mass of 100 to 200 Dalton.

6. Method according to Claim 5, **characterized in that** the dihydroxyalkanecarboxylic acid used is dimethylolpropionic acid.

7. Method according to any of Claims 1 to 6, **characterized in that** the solvent component (B) comprises hydrophilic organic solvents having a boiling point above 180°C (at atmospheric pressure).

8. Method according to Claim 7, **characterized in that** the high-boiling and hydrophilic organic solvent used is N-methylpyrrolidone.

9. Method according to any of Claims 1 to 8, **characterized in that** the polyisocyanate component (C) is at least one polyisocyanate, polyisocyanate derivative or polyisocyanate homologue having two or more aliphatic or aromatic isocyanate groups.

10. Method according to Claim 9, **characterized in that** the aliphatic polyisocyanate used is isophorone diisocyanate.

11. Method according to any of Claims 1 to 10, **characterized in that** the neutralizing component (D) used comprises ammonia, tertiary amines or alkali metal hydroxides.

12. Method according to Claim 11, **characterized in that** the tertiary amine used is triethylamine.

13. Method according to any of Claims 1 to 12, **characterized in that** the chain-extending component (F) is at least one polyamine having two or more primary and/or secondary aliphatic amino groups reactive towards polyisocyanates.

14. Method according to Claim 13, **characterized in that** the aliphatic polyamine used is ethylenediamine.

15. Method for producing the polyurethane resin according to any of Claims 1 to 14, **characterized in that** the stage a) is carried out at a temperature of 20 to 120°C, in particular at 60 to 80°C.

16. Method according to any of Claims 1 to 15, **characterized in that** the NCO/OH equivalent ratio of the components (C) and (A) in stage b) is adjusted to a value of 2.5 to 4.0.

17. Method according to any of Claims 1 to 16, **characterized in that** the stage b) is carried out at a temperature of 60 to 120°C, in particular at 80 to 100°C.

18. Method according to any of Claims 1 to 17, **characterized in that** the NCO/OH equivalent ratio of the polyurethane preadduct from stage b) and of the component (A) is adjusted to a value of 1.6 to 3.0 in stage c).

19. Method according to any of Claims 1 to 18, **characterized in that** the stage c) is carried out at a temperature of 60 to 120°C, in particular at 80 to 100°C.

20. Method according to any of Claims 1 to 19,
**characterized in that** the NCO/OH equivalent ratio of the total amount of the components (A) and (C) is adjusted to a value of 1.2 to 2.2, in particular 1.4 to 2.0.

21. Method according to any of Claims 1 to 20,
**characterized in that** the stages b) and c) is, if required, carried out in the presence of 0.01 to 1 part by weight, based on the total amount of the components (A), (B) and (C), of a catalyst customary for the polyaddition reactions with polyisocyanates.

22. Method according to any of Claims 1 to 21, **characterized in that** a premix of the components (A) (i), (A) (ii), (A) (iii) and, if required, (B) is prepared in stage a) and the premix in stage a) is then used in the stages b) and c).

23. Method according to any of Claims 1 to 21, **characterized in that** a premix of the components (A) (i), (A) (ii) and, if required, (B) is prepared in stage a), the premix from stage a) is then used completely in stage b) and the component (A) (iii) is reacted only in stage c).

24. Method according to any of Claims 1 to 23, **characterized in that** the neutralizing component (D) is added in an amount such that the degree of neutralization, based on the free carboxyl groups of the polyurethane prepolymer, is 70 to 100 equivalent %, in particular 80 to 100 equivalent %, preferably 90 to 100 equivalent %.

25. Method according to any of Claims 1 to 24, **characterized in that**, in stage d), the polyurethane prepolymer from stage c) is covered with a layer of prepared mixture of water, the neutralizing component (D) and the antifoam component (E) and is then mixed.

26. Method according to any of Claims 1 to 24, **characterized in that**, in stage d), the polyurethane prepolymer from stage c) is stirred into the prepared mixture of water, the neutralizing component (D) and the antifoam component (E).

27. Method according to any of Claims 1 to 26, **characterized in that** the neutralizing component (D) is stirred into the polyurethane prepolymer after stage c).

28. Method according to any of Claims 1 to 27, **characterized in that** the stage d) is carried out at a temperature of 20 to 80°C, in particular at 40 to 60°C.

29. Method according to any of Claims 1 to 28, **characterized in that**, in stage e), the chain-extending component (F) is used in an amount such that the degree of chain extension, based on the free isocyanate groups of the polyurethane resin, is 10 to 100 equivalent %, in particular 50 to 100 equivalent %.

30. Method according to any of Claims 1 to 29, **characterized in that** the chain-extending component (F) is, if required, used in stage d) as a prepared mixture with water, the neutralizing component (D) and the antifoam component (E).

31. Method according to any of Claims 1 to 30, **characterized in that** the stage e) is carried out at a temperature of 20 to 80°C, in particular at 30 to 50°C.

32. Method according to any of Claims 1 to 31, **characterized in that** the processing time between the end of the stage c) and the end of the stage e) is less than 1 hour, preferably less than 30 minutes.

33. Self-emulsifiable, aqueous polyurethane resins, **characterized in that** they are obtainable by a method according to any of Claims 1 to 32.

34. Use of the self-emulsifiable, aqueous polyurethane resins prepared according to any of Claims 1 to 32 in the building sector as binders for one-component or two-component coatings, sealants, adhesives, finishes, membranes, sport floor coverings and seals for the surfaces of mineral building materials, such as, for example, concrete, gypsum or cement, and glass, wood and wood-based materials, paper, metal or plastic

## Revendications

1. Procédé de préparation de résines polyuréthane aqueuses auto-émulsifiantes, **caractérisé en ce que**
a) on prépare d'abord un prémélange d'un constituant polyol (A), constitué de 5 à 25 parties en poids d'au moins un diol (A) (i) ayant une masse molaire de 500 à 5 000 daltons, de 0,5 à 5 parties en poids d'au moins un polyhydroxyalcane (A) (ii), ainsi que de 0 à 5 parties en poids d'au moins un acide dihydroxyalcanecarboxylique (A) (iii) anioniquement modifiable, et de 0 à 9 parties en poids d'un constituant solvant (B),
b) on fait réagir 5 à 50 parties en poids d'un constituant polyisocyanate (C) avec 11 à 39 parties en poids du prémélange de l'étape a) pour obtenir un préproduit d'addition polyuréthane, le rapport d'équivalents NCO/OH étant de 1,75 à 8,0 dans cette étape,
c) on fait réagir le préproduit d'addition polyuréthane de l'étape b) soit avec 5 à 33 parties en poids du prémélange de l'étape a), soit avec 0,5 à 5 parties en poids d'un acide dihydroxyalcanecarboxylique (A) (iii) anioniquement modifiable pour obtenir un prépolymère polyuréthane, le rapport d'équivalents NCO/OH étant dans cette étape de 1,5 à 8,0, en particulier de 1,5 à 5,0,
d) on mélange ensuite le prépolymère polyuréthane de l'étape c) avec un mélange préparé préalablement à partir de 5 à 225 parties en poids d'eau, de 0,5 à 4 parties en poids d'un constituant de neutralisation (D) et de 0 à 1 partie en poids d'un constituant antimousse (E), puis, ou en même temps,
e) on fait réagir le prépolymère polyuréthane aqueux de l'étape d) avec 0,025 à 4 parties en poids d'un constituant d'allongement de chaîne (F) qui est dilué dans le rapport 1:10 à 10:1 avec des portions de l'eau de l'étape d) prélevées au préalable.

2. Procédé selon la revendication 1, **caractérisé en ce que**, en ce qui concerne le constituant diol (A) (i), il s'agit de diols polymères linéaires ayant deux groupes hydroxyle réactifs envers les polyisocyanates et une masse molaire de 1 000 à 4 000 daltons.

3. Procédé selon la revendication 2, **caractérisé en ce que** l'on utilise comme diols polymères linéaires des polyalkylèneglycols, des polyesterpolyols, des α,ω-dihydroxypolyoléfines ou des mélanges de ceux-ci.

4. Procédé selon l'une des revendications 1 à 3, **caractérisé en ce que**, en ce qui concerne le constituant polyhydroxyalcane (A) (ii), il s'agit de polyols de faible masse molaire ayant deux ou plusieurs groupes hydroxyle réactifs envers les polyisocyanates et une masse molaire de 50 à 500 daltons.

5. Procédé selon l'une des revendications 1 à 4, **caractérisé en ce que**, en ce qui concerne l'acide dihydroxyalcanecarboxylique (A) (iii), il s'agit de composés de faible masse molaire ayant deux groupes hydroxyle réactifs envers les polyisocyanates et un ou plusieurs groupes carboxyle inertes à l'égard de polyisocyanates, et d'une masse molaire de 100 à 200 daltons.

6. Procédé selon la revendication 5, **caractérisé en ce que** l'on utilise l'acide diméthylolpropionique comme acide dihydroxyalcanecarboxylique.

7. Procédé selon l'une des revendications 1 à 6, **caractérisé en ce que** le constituant solvant (B) est un solvant organique hydrophile ayant un point d'ébullition supérieur à 180°C (sous la pression normale).

8. Procédé selon la revendication 7, **caractérisé en ce que** l'on utilise la N-méthylpyrrolidone comme solvant organique hydrophile de point d'ébullition élevé.

9. Procédé selon l'une des revendications 1 à 8, **caractérisé en ce que** dans le cas du constituant polyisocyanate (C) il s'agit d'au moins un polyisocyanate, dérivé de polyisocyanate ou homologue de polyisocyanate ayant deux ou plusieurs groupes isocyanate aliphatiques ou aromatiques.

10. Procédé selon la revendication 9, **caractérisé en ce que** l'on utilise le diisocyanate d'isophorone comme polyisocyanate aliphatique.

11. Procédé selon l'une des revendications 1 à 10, **caractérisé en ce que** le constituant de neutralisation (D) est l'ammoniac, une amine tertiaire ou un hydroxyde de métal alcalin.

12. Procédé selon la revendication 11, **caractérisé en ce que** l'on utilise la triéthylamine comme amine tertiaire.

13. Procédé selon l'une des revendications 1 à 12, **caractérisé en ce que** dans le cas du constituant d'allongement de chaîne (F) il s'agit d'au moins une polyamine ayant deux ou plusieurs groupes amino aliphatiques primaires et/ou secondaires réactifs envers les polyisocyanates.

14. Procédé selon la revendication 13, **caractérisé en ce que en ce que** l'on utilise l'éthylènediamine comme polyamine aliphatique.

15. Procédé de préparation de la résine polyuréthane selon l'une des revendications 1 à 14, **caractérisé en ce que** l'on effectue l'étape a) à une température de 20 à 120°C, en particulier de 60 à 80°C.

16. Procédé selon l'une des revendications 1 à 15, **caractérisé en ce que**, dans l'étape b), on ajuste le rapport d'équivalents NCO/OH des constituants (C) et (A) à une valeur de 2,5 à 4,0.

17. Procédé selon l'une des revendications 1 à 16, **caractérisé en ce que** l'on effectue l'étape b) à une température de 60 à 120°C, en particulier de 80 à 100°C.

18. Procédé selon l'une des revendications 1 à 17, **caractérisé en ce que**, dans l'étape c), on ajuste le rapport d'équivalents NCO/OH du préproduit d'addition polyuréthane de l'étape b) et du constituant (A) à une valeur de 1,6 à 3,0.

19. Procédé selon l'une des revendications 1 à 18, **caractérisé en ce que** l'on effectue l'étape c) à une température de 60 à 120°C, en particulier de 80 à 100°C.

20. Procédé selon l'une des revendications 1 à 19, **caractérisé en ce que** l'on ajuste le rapport d'équivalents NCO/OH de la quantité totale des constituants (A) et (C) à une valeur de 1,2 à 2,2, en particulier de 1,4 à 2,0.

21. Procédé selon l'une des revendications 1 à 20, **caractérisé en ce que** l'on effectue les étapes b) et c) éventuellement en présence de 0,01 à 1 partie en masse, par rapport à la quantité totale des constituants (A), (B) et (C), d'un catalyseur classique pour les réactions de polyaddition sur des polyisocyanates.

22. Procédé selon l'une des revendications 1 à 21, **caractérisé en ce que**, dans l'étape a), on prépare un prémélange des constituants (A) (i), (A) (ii), (A) (iii) et éventuellement (B) et qu'on utilise ensuite le prémélange de l'étape a) dans les étapes b) et c).

23. Procédé selon l'une des revendications 1 à 21, **caractérisé en ce que**, dans l'étape a), on prépare un prémélange des constituants (A) (i), (A) (ii) et éventuellement (B), qu'on utilise ensuite la totalité du prémélange de l'étape a) dans l'étape b), et qu'on ne fait réagir le constituant (A) (iii) que dans l'étape (c).

24. Procédé selon l'une des revendications 1 à 23, **caractérisé en ce que** l'on ajoute le constituant de neutralisation (D) en une quantité telle que le degré de neutralisation par rapport aux groupes carboxyle libres du prépolymère polyuréthane est de 70 à 100 % en équivalents, en particulier de 80 à 100 % en équivalents, de préférence de 90 à 100 % en équivalents.

25. Procédé selon l'une des revendications 1 à 24, **caractérisé en ce que**, dans l'étape d), on recouvre le prépolymère polyuréthane de l'étape c) avec le mélange préalablement préparé d'eau, du constituant de neutralisation (D) et du constituant antimousse (E), puis on mélange.

26. Procédé selon l'une des revendications 1 à 24, **caractérisé en ce que**, dans l'étape d), on délaye sous agitation le prépolymère polyuréthane de l'étape c) dans le mélange préalablement préparé d'eau, du constituant de neutralisation (D) et du constituant antimousse (E).

27. Procédé selon l'une des revendications 1 à 26, **caractérisé en ce que** l'on délaye sous agitation le constituant de neutralisation (D) dans le prépolymère polyuréthane dès après l'étape c).

28. Procédé selon l'une des revendications 1 à 27, **caractérisé en ce que** l'on effectue l'étape d) à une température de 20 à 80°C, en particulier de 40 à 60°C.

29. Procédé selon l'une des revendications 1 à 28, **caractérisé en ce que**, dans l'étape e), on utilise le constituant d'allongement de chaîne (F) en une quantité telle que le degré d'allongement des chaînes est de 10 à 100 % en équivalents, en particulier de 50 à 100 % en équivalents par rapport aux groupes isocyanate libres de la résine polyuréthane.

30. Procédé selon l'une des revendications 1 à 29, **caractérisé en ce que** l'on utilise le constituant d'allongement de chaîne (F) éventuellement dès l'étape d) sous forme de mélange préalablement préparé avec l'eau, le constituant de neutralisation (D) et le constituant antimousse (E).

31. Procédé selon l'une des revendications 1 à 30, **caractérisé en ce que** l'on effectue l'étape e) à une température de 20 à 80°C, en particulier de 30 à 50°C.

32. Procédé selon l'une des revendications 1 à 31, **caractérisé en ce que** le temps de traitement entre la fin de l'étape c) et la fin de l'étape e) est inférieur à une heure, de préférence inférieur à 30 minutes.

33. Résines polyuréthane aqueuses, auto-émulsifiantes, **caractérisées en ce qu'**elles sont susceptibles d'être obtenues par un procédé selon l'une des revendications 1 à 32.

34. Utilisation des résines polyuréthane aqueuses, auto-émulsifiantes préparées selon l'une des revendications 1 à 32 dans le secteur de la construction comme liants pour des revêtements à un ou deux constituants, des produits d'étanchéité, des colles, des peintures, des membranes, des revêtements de sol pour activités sportives et des apprêts pour des surfaces de matériaux de construction inorganiques comme, par exemple, du béton, du plâtre, du ciment, ainsi que du verre, du bois et des matériaux dérivés du bois, du papier, du métal ou des matières plastiques.
